# EUROPÄISCHE PATENTSCHRIFT

(11) **EP 4 225 630 B1**
(45) Veröffentlichungstag und Bekanntmachung des Hinweises auf die Patenterteilung: **18.03.2026**
(21) Anmeldenummer: 21823237.9
(22) Anmeldetag: 29.11.2021
(51) Int. Cl.: B62H 5/00

(54) **HALTERUNG FÜR EIN BÜGELSCHLOSS**
D-LOCK MOUNTING
ÉLÉMENT DE RETENUE POUR CADENAS EN U

(30) Priorität: 08.12.2020 DE 102020132683
(43) Veröffentlichungstag der Anmeldung: 16.08.2023
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB
(86) Internationale Anmeldenummer: PCT/EP2021/083307
(87) Internationale Veröffentlichungsnummer: WO 2022/122440

(56) Entgegenhaltungen:
- WO-A1-2011/025910
- DE-A1- 102006 030 498
- DE-A1- 102015 116 982
- DE-U1- 202004 005 928
- DE-U1- 9 407 386
- US-A- 5 458 308
- US-A1- 2005 011 921

## Beschreibung

Die Erfindung betrifft eine Halterung zum Befestigen eines zugeordneten, einen Schlosskörper und einen Bügel aufweisenden Bügelschlosses an einem Zweirad, insbesondere an einem Fahrrad.

DE 94 07 386 U1 offenbart eine Halterung zum Befestigen eines zugeordneten, einen Schlosskörper und einen Bügel aufweisenden Bügelschlosses an einem Zweirad.

Zum Sichern von Zweirädern gegen ein unbefugtes Wegfahren können transportable Bügelschlösser verwendet werden, bei welchen ein Bügel an einem Schlosskörper verriegelt oder zumindest ein Schenkel des Bügels wahlweise für ein Lösen von dem Schlosskörper freigegeben werden kann. Beispielsweise kann der freigegebene Bügel des Bügelschlosses zum Sichern des Zweirads derart um einen Rahmenabschnitt des Zweirads und einen ortsfesten Gegenstand, etwa einen Laternenpfahl oder einen Fahrradständer, geführt werden, dass das Zweirad nach einem Verriegeln des Bügels an dem Schlosskörper sicher mit dem ortsfesten Gegenstand verbunden ist. Alternativ dazu kann der Bügel beispielsweise durch einen Rahmenabschnitt des Zweirads und eines der Laufräder geführt werden, so dass eine Drehung des Laufrads durch das Bügelschloss nach einem Verriegeln des Bügels an dem Schlosskörper blockiert und das Zweirad gegen ein unbefugtes Wegfahren gesichert ist.

Der Bügel eines Bügelschlosses kann beispielsweise starr und U-förmig ausgebildet sein, wobei ein solcher U-förmiger Bügel zwei Schenkel aufweist, die über einen Verbindungsabschnitt miteinander verbunden sind. Die Schenkel können bei einigen Bügelschlössern gleich lang sein und der gesamte Bügel kann wahlweise von dem Schlosskörper lösbar sein, um das Bügelschloss mit einem Gegenstand verbinden zu können. Alternativ dazu kann der Bügel beispielsweise einen kurzen und einen langen Schenkel aufweisen, wobei lediglich der kurze Schenkel von dem Schlosskörper lösbar und in einem geöffneten Zustand des Bügelschlosses um den langen Schenkel verschwenkbar sein kann, um den Bügel um einen zu sichernden Gegenstand führen zu können.

Da solche Bügelschlösser bei einer Verwendung zum Sichern von Zweirädern häufig während Fahrten mit dem Zweirad zwischen verschiedenen Orten transportiert werden, ist es von Nutzern solcher Schlösser gewünscht, das verwendete Bügelschloss komfortabel transportieren zu können, ohne stets beispielsweise eine Tasche oder einen Rucksacks zum Verstauen des Bügelschlosses mitführen zu müssen. Es besteht daher ein Bedarf an Halterungen, in welche das Bügelschloss eingesetzt und an dem Zweirad befestigt werden kann, um das Bügelschloss während einer Fahrt unmittelbar an dem Zweirad befestigt mitführen zu können.

Bei der Ausbildung solcher Halterungen ergibt sich jedoch die Problematik, dass die Halterungen einerseits kompakt ausgebildet sein müssen, um die Fahrt mit dem Zweirad nicht zu beeinträchtigen, gleichzeitig jedoch eine zuverlässige Befestigung von Bügelschlössern gewährleisten müssen, um ein ungewolltes Lösen eines eingesetzten Bügelschlosses insbesondere während der Fahrt zu verhindern. Zudem können Bügelschlösser, beispielsweise im Hinblick auf ihre Form und insbesondere einen Querschnitt des Bügels, unterschiedlich ausgebildet sein, wobei eine Halterung möglichst zur sicheren Aufnahme einer Vielzahl von Bügelschlössern ausgebildet sein sollte, um eine flexible Nutzung der Halterung zum Befestigen verschiedener Bügelschlösser zu ermöglichen. Zudem ist es gewünscht, dass derartige Halterungen einfach zu montieren und komfortabel zu bedienen sind, so dass ein Nutzer das Bügelschloss für einen Transport schnell und sicher in der Halterung fixieren und zum Versperren eines Zweirads auf einfache Weise wieder aus der Halterung entnehmen kann.

Es ist daher eine Aufgabe der Erfindung, eine Halterung zum Befestigen eines zugeordneten Bügelschlosses an einem Zweirad zu schaffen, welche eine zuverlässige Befestigung bei einfacher und flexibler Handhabung ermöglicht.

Diese Aufgabe wird gelöst durch eine Halterung mit den Merkmalen des Anspruchs 1 und insbesondere dadurch, dass die Halterung ein sich entlang einer Längsachse der Halterung erstreckendes Gehäuse und ein Einsatzteil umfasst, welches zumindest teilweise innerhalb des Gehäuses angeordnet und relativ zu dem Gehäuse um eine Drehachse zwischen einer Einsetzdrehstellung und einer Arretierdrehstellung drehbar ist. Die Halterung weist einen Aufnahmeraum für einen Schenkel des Bügels auf, in welchen der Schenkel in der Einsetzdrehstellung einsetzbar ist, wobei der in den Aufnahmeraum eingesetzte Schenkel durch Drehen des Einsatzteils von der Einsetzdrehstellung in die Arretierdrehstellung in dem Aufnahmeraum verspannbar ist.

Das in die Halterung bzw. deren Aufnahmeraum einsetzbare Bügelschloss kann dabei insbesondere einen Bügel mit einem ersten und einem zweiten Schenkel aufweisen, wobei der erste und/oder der zweite Schenkel in der Einsetzdrehstellung in den Aufnahmeraum einsetzbar sein können bzw. kann. Beispielsweise kann der Schenkel des Bügels im Querschnitt und/oder im in den Aufnahmeraum eingesetzten Zustand in einer Projektion auf eine senkrecht zu der Längsachse der Halterung orientierte Ebene kreisförmig oder rechteckig, insbesondere quadratisch, ausgebildet sein. Ferner kann der Schenkel eine Querschnittsfläche aufweisen, welche rotationssymmetrisch bezüglich einer Drehung um einen Winkel ist, um welchen das Einsatzteil von der Einsetzdrehstellung in die Arretierdrehstellung gedreht wird.

Indem das Einsatzteil von einer Einsetzdrehstellung in eine Arretierdrehstellung drehbar ist, um den Schenkel zunächst in der Einsetzdrehstellung in den Aufnahmeraum einsetzen und sodann in der Arretierdrehstellung in dem Aufnahmeraum verspannen zu können, kann die Halterung durch eine einfache rotatorische Bewegung von einem Nutzer zum sicheren Aufnehmen eines Bügelschlosses bedient werden. Um den Schenkel in der Einsetzdrehstellung komfortabel in den Aufnahmeraum einsetzen und in der Arretierdrehstellung in dem Aufnahmeraum verspannen zu können, kann beispielsweise eine Querschnittsfläche des Aufnahmeraums in der Einsetzdrehstellung größer als in der Arretierdrehstellung sein. Insbesondere ein in der Einsetzdrehstellung formschlüssig in den Aufnahmeraum eingesetzter Schenkel kann somit nach einem Drehen des Einsatzteils in die Arretierdrehstellung in dem Aufnahmeraum verspannt sein. Dabei kann es beispielsweise vorgesehen sein, dass der Schenkel in der Einsetzdrehstellung entlang der Längsachse der Halterung in den Aufnahmeraum einsetzbar ist oder dass die Halterung eine sich entlang der Längsachse erstreckende Öffnung aufweist, durch welche der Schenkel senkrecht zu der Längsachse in den Aufnahmeraum einsetzbar ist.

Der Aufnahmeraum kann in einer senkrecht zu der Längsachse der Halterung orientierten Ebene beispielsweise in der Einsetzdrehstellung dreiseitig begrenzt und einseitig offen sein, um den Schenkel durch die offene Seite in den Aufnahmeraum einsetzen zu können. Eine Querschnittsfläche des Aufnahmeraums kann bei einer solchen Ausbildung der Halterung jedoch in der Einsetzdrehstellung der maximalen Querschnittsfläche eines Schenkels entsprechen, für welchen eine Drehung des Einsatzteils aus der Einsetzdrehstellung in die Arretierdrehstellung bei eingesetztem Schenkel möglich und nicht durch den Schenkel gesperrt ist. Alternativ dazu kann der Aufnahmeraum in der Einsetzdrehstellung im Querschnitt beispielsweise vierseitig begrenzt sein, wobei der Schenkel entlang der Längsachse der Halterung in den Aufnahmeraum einsetzbar sein kann. In der Arretierdrehstellung kann der Aufnahmeraum zumindest zweiseitig begrenzt sein, um den Schenkel zumindest zwischen zwei Seiten verspannen zu können. Insbesondere kann der Aufnahmeraum in der Arretierdrehstellung dreiseitig oder vierseitig begrenzt sein.

Ferner kann es insbesondere vorgesehen sein, dass der Schenkel in der Arretierdrehstellung zumindest entlang einer senkrecht zu der Drehachse des Einsatzteils ausgerichteten Richtung in dem Aufnahmeraum verspannbar ist. Beispielsweise kann dazu entlang einer solchen senkrechten Richtung in der Arretierdrehstellung ein Druck auf den Schenkel wirken, so dass der Schenkel in dieser Richtung in dem Aufnahmeraum verspannt ist. Ferner kann es vorgesehen sein, dass der Schenkel in zumindest zwei Richtungen in dem Aufnahmeraum verspannbar ist, wobei diese Richtungen insbesondere senkrecht zu der Drehachse des Einsatzteils und senkrecht zueinander ausgerichtet sein können.

Durch das Verspannen eines Schenkels des Bügels in dem Aufnahmeraum können der Bügel und der damit verbundene Schlosskörper sicher in der Halterung gehalten werden, so dass das Bügelschloss über die Halterung sicher an dem Zweirad befestigt werden kann. Dabei kann es vorgesehen sein, dass der Schenkel in einem geschlossenen Zustand des Bügelschlosses, in welchem der Bügel an dem Schlosskörper befestigt und insbesondere verriegelt ist, in den Aufnahmeraum einsetzbar ist, wenn sich das Einsatzteil in der Einsetzdrehstellung befindet. Ein Nutzer kann dadurch das gesamte Bügelschloss in einem einzigen Schritt in die Halterung einsetzen und an dem Zweirad befestigen, ohne dass der Schlosskörper erst daraufhin in einem weiteren Schritt mit dem Bügel verbunden werden muss. Alternativ dazu ist es jedoch auch möglich, dass der Schenkel zunächst in den Aufnahmeraum einsetzbar bzw. einzusetzen ist, woraufhin der Schlosskörper mit dem Bügel verbunden werden kann. Beispielsweise kann der Schenkel dazu in der Einsetzdrehstellung des Einsatzteils entlang der Längsachse der Halterung in den Aufnahmeraum einschiebbar sein, um den Schlosskörper daraufhin mit dem Bügel zu verbinden.

Durch das Verspannen des Schenkels in dem Aufnahmeraum kann der Schenkel in der Arretierdrehstellung sowohl axial bezüglich der Längsachse der Halterung als auch in radialen Richtungen in dem Aufnahmeraum fixiert sein, wobei etwaige Drehbewegungen des Schenkels in dem Aufnahmeraum durch das Verspannen ebenfalls unterbunden werden können. Bewegungen des in der Halterung gehaltenen Bügelschlosses können somit verhindert werden, so dass das Bügelschloss sicher in der Halterung gehalten und einer Geräuschbildung in Form eines Klapperns während der Fahrt entgegengewirkt werden kann. Dabei kann das Einsatzteil axial bezüglich der Längsachse der Halterung in dem Gehäuse festgelegt angeordnet und radial in einem Winkelbereich von zumindest 180° von dem Gehäuse umschlossen sein, so dass das Einsatzteil ausschließlich rotatorisch relativ zu dem Gehäuse bewegbar sein kann. Translatorische Relativbewegungen zwischen den Bauteilen der Halterung können somit insbesondere in der Arretierdrehstellung ausgeschlossen sein. Ferner kann das Einsatzteil in der Arretierdrehstellung blockiert bzw. blockierbar sein, so dass auch ein ungewolltes Drehen des Einsatzteils, insbesondere in die Einsetzdrehstellung, und ein Lösen der Verspannung des Schenkels verhindert werden können.

Weitere Ausführungsformen sind den abhängigen Ansprüchen, der Beschreibung sowie den Zeichnungen zu entnehmen.

Bei einigen Ausführungsformen kann das Einsatzteil eine Anlagefläche für den Schenkel aufweisen, welche den Aufnahmeraum einseitig begrenzt, wobei der Schenkel zwischen der Anlagefläche und einer der Anlagefläche in der Arretierdrehstellung entgegengesetzten Innenseite des Gehäuses verspannbar sein kann.

Insbesondere kann die Anlagefläche durch das Drehen des Einsatzteils von der Einsetzdrehstellung in die Arretierdrehstellung in eine Stellung gebracht werden, in welcher die Anlagefläche der Innenseite des Gehäuses entgegengesetzt ist, so dass der Schenkel in der Arretierdrehstellung zwischen der Anlagefläche und der Innenseite angeordnet ist. Der in den Aufnahmeraum eingesetzte Schenkel kann durch eine solche Bewegung der Anlagefläche in der Arretierdrehstellung zwischen der Anlagefläche und dem Innengehäuse verspannt werden, wobei die Anlagefläche infolge der Drehung in die Arretierdrehstellung einen Druck auf den Schenkel in Richtung der Innenseite ausüben kann. Die zum Verspannen des Schenkels wirkenden Kräfte können dabei insbesondere senkrecht zu der Längsachse der Halterung und/oder der Drehachse des Einsatzteils wirken. Indem das Einsatzteil dabei relativ zu dem Gehäuse ausschließlich drehbar sein kann, kann das Einsatzteil in der Richtung oder den Richtungen, in welcher Kräfte zum Verspannen des Schenkels wirken, fixiert in dem Gehäuse gehalten sein, so dass die Kräfte auf das Gehäuse übertragen und abgeleitet werden können.

Ferner kann es vorgesehen sein, dass der Schenkel sowohl in der Einsetzdrehstellung als auch in der Arretierdrehstellung an der Anlagefläche anlegbar ist. Infolge und/oder während eines Drehens des Einsatzteils in die Arretierdrehstellung kann sich insbesondere eine Erstreckung des Aufnahmeraums ausgehend von der Anlagefläche ändern, wobei diese Erstreckung in der Arretierdrehstellung des Einsatzteils durch den Abstand zwischen der Anlagefläche und der Innenseite des Gehäuses definiert sein kann. Die Erstreckung des Aufnahmeraums ausgehend von der Anlagefläche kann sich während der Drehung insbesondere verringern, so dass ein in der Einsetzdrehstellung in den Aufnahmeraum einsetzbarer und an der Anlagefläche anliegender, insbesondere ein formschlüssig in den Aufnahmeraum einsetzbarer, Schenkel in der Arretierdrehstellung zwischen der Anlagefläche und der Innenseite verspannt werden kann.

Der in den Aufnahmeraum eingesetzte Schenkel kann beispielsweise während einer Drehung des Einsatzteils mitdrehen, oder das Einsatzteil kann relativ zu dem eingesetzten Schenkel gedreht werden, um den Schenkel in der Arretierdrehstellung zu verspannen. Sowohl bei einem mitdrehenden Schenkel als auch bei einem bezüglich des Gehäuses feststehenden Schenkel kann es vorgesehen sein, dass ein Mittelpunkt einer Querschnittsfläche des in der Einsetzdrehstellung in den Aufnahmeraum eingesetzten und an der Anlagefläche anliegenden Schenkels exzentrisch zu der Drehachse des Einsatzteils angeordnet ist. Der Abstand zwischen diesem Mittelpunkt und der Anlagefläche kann sich dadurch infolge einer Drehung des Einsatzteils verändern und insbesondere verringern, so dass die Anlagefläche in der Arretierdrehstellung einen in Richtung der Innenseite des Gehäuses gerichteten Druck auf den Schenkel ausüben kann.

In der Arretierdrehstellung kann der Aufnahmeraum zumindest einseitig durch das Gehäuse und insbesondere die genannte Innenseite begrenzt sein. Insbesondere in der Einsetzdrehstellung kann der Aufnahmeraum in senkrecht zu der Längsachse der Halterung orientierten Ebenen jedoch einseitig offen sein, um den Schenkel in den Aufnahmeraum einsetzen zu können. Dabei kann das Einsatzteil den Aufnahmeraum sowohl in der Einsetzdrehstellung als auch in der Arretierdrehstellung beispielsweise einseitig, zweiseitig oder dreiseitig begrenzen. Der Aufnahmeraum kann in der Einsetzdrehstellung und in der Arretierdrehstellung an einer gleichen Anzahl von Seiten in einer Projektion auf eine senkrecht zu der Längsachse ausgerichtete Ebene durch das Einsatzteil begrenzt sein. Insbesondere kann die Innenseite des Gehäuses in der Arretierdrehstellung eine im Vergleich zu der Einsetzdrehstellung zusätzliche Begrenzung an einer Seite des Aufnahmeraums in einer Projektion auf eine zu der Längsachse der Halterung senkrecht orientierte Ebene bilden.

Bei einigen Ausführungsformen kann in einer sich senkrecht zu der Längsachse erstreckenden Ebene der Aufnahmeraum in der Einsetzdrehstellung eine erste lichte Höhe und in der Arretierdrehstellung eine zweite lichte Höhe aufweisen, wobei die zweite lichte Höhe einem Abstand zwischen der Anlagefläche und dem Gehäuse, insbesondere der Innenseite, entspricht und wobei die zweite lichte Höhe geringer ist als die erste lichte Höhe.

Die lichte Höhe ist somit in einer senkrecht zur Längsachse orientierten Ebene und entlang der Richtung definiert, in welcher die Anlagefläche und die Innenseite des Gehäuses einander in der Arretierdrehstellung des Einsatzteils entgegengesetzt sind. Folglich ist die Richtung, entlang derer die lichte Höhe des Aufnahmeraums zu bestimmen ist, von der Drehstellung des Einsatzteils unabhängig. Indem die zweite lichte Höhe geringer ist als die erste lichte Höhe, kann ein in der Einsetzdrehstellung in den Aufnahmeraum eingesetzter Schenkel, dessen Querschnittsdurchmesser beispielsweise der ersten lichten Höhe entsprechen kann, durch das Drehen des Einsatzteils in die Arretierdrehstellung in dem Aufnahmeraum verspannt werden. Dazu kann der Schenkel bzw. der Bügel beispielsweise einen elastisch verformbaren Mantel aufweisen, so dass der Schenkel durch zumindest zweiseitiges Komprimieren dieses Mantels zwischen der Anlagefläche und der Innenseite in der Arretierdrehstellung in dem Aufnahmeraum verspannt werden kann. Die erste lichte Höhe und/oder die zweite lichte Höhe können dabei an eine Querschnittsfläche des einzusetzenden Schenkels angepasst und/oder anpassbar sein, um den Schenkel zuverlässig in dem Aufnahmeraum verspannen zu können. Beispielsweise kann zum Verringern der ersten lichten Höhe und/oder der zweiten lichten Höhe ein Adapter in das Gehäuse und/oder in das Einsatzteil einsetzbar sein, um den Abstand zwischen der Anlagefläche und dem Gehäuse in der Arretierdrehstellung verringern und einen Schenkel mit geringerem Querschnittsdurchmesser in der Halterung verspannen zu können. Dies wird nachstehend noch näher erläutert.

Die Anlagefläche kann bei einigen Ausführungsformen zumindest einen in der Arretierdrehstellung in Richtung der Innenseite des Gehäuses wegragenden Eingriffsabschnitt aufweisen, durch welchen der in den Aufnahmeraum eingesetzte Schenkel in der Arretierdrehstellung des Einsatzteils axial bezüglich der Längsachse der Halterung in dem Aufnahmeraum fixiert ist. Insbesondere kann die Anlagefläche an einander axial bezüglich der Längsachse entgegengesetzten Endabschnitten des Aufnahmeraums einen jeweiligen Eingriffsabschnitt aufweisen.

Beispielsweise können der Eingriffsabschnitt oder die Eingriffsabschnitte stegartige und sich senkrecht zu der Längsachse der Halterung erstreckende Erhebungen an der Anlagefläche bilden, so dass der Abstand zwischen der Anlagefläche und der Innenseite des Gehäuses im Bereich der Eingriffsabschnitte verringert sein kann. Der Eingriffsabschnitt oder die Eingriffsabschnitte können dadurch beispielsweise in einen elastisch verformbaren Mantel des sich in dem Aufnahmeraum befindenden Schenkels eingreifen, um den Schenkel axial in dem Aufnahmeraum zu fixieren. Insbesondere können sich die genannten Eingriffsabschnitte senkrecht zu der Längsachse der Halterung über die gesamte Anlagefläche erstrecken, während es auch vorgesehen sein kann, dass die Eingriffsabschnitte lokale Erhebungen geringerer Erstreckung an der Anlagefläche bilden.

Es kann vorgesehen sein, dass der Schenkel in der Arretierdrehstellung durch den Eingriffsabschnitt oder die Eingriffsabschnitte in dem Aufnahmeraum verspannt ist. Indem insbesondere zwei in jeweiligen Endabschnitten des Aufnahmeraums angeordnete Eingriffsabschnitte an der Anlagefläche ausgebildet sein können, kann der Schenkel insbesondere zweiseitig axial in dem Aufnahmeraum fixiert sein. Zudem kann durch ein solches zweiseitiges Eindrücken der Eingriffsabschnitte in den Schenkel eine Spannkraft auf den Schenkel übertragen werden, um den Schenkel sicher in dem Aufnahmeraum bzw. in der Halterung zu halten. Alternativ oder zusätzlich kann es jedoch auch vorgesehen sein, dass die Anlagefläche außerhalb der Eingriffsabschnitte an dem in den Aufnahmeraum eingesetzten Schenkel anliegt und/oder einen Druck auf den Schenkel in Richtung der Innenseite des Gehäuses entfaltet, um die in der Arretierdrehstellung erzeugte Spannwirkung zu erhöhen.

Die Drehachse kann bei einigen Ausführungsformen parallel zu der Längsachse der Halterung ausgerichtet sein oder der Längsachse der Halterung entsprechen. Auch der in die Halterung bzw. in den Aufnahmeraum eingesetzte Schenkel kann sich entlang der Längsachse der Halterung erstrecken, wobei der mit dem eingesetzten Schenkel verbundene Schlosskörper senkrecht zu der Längsachse der Halterung und somit der Drehachse des Einsatzteils orientiert sein kann. Die Längsachse der Halterung kann insbesondere der Richtung der größten Erstreckung der Halterung und/oder des Gehäuses entsprechen, so dass der Schenkel möglichst großflächig in dem Aufnahmeraum aufgenommen und verspannt werden kann.

Es kann bei einigen Ausführungsformen vorgesehen sein, dass das Einsatzteil durch Drehen um einen Winkel zwischen 20° und 160° von der Einsetzdrehstellung in die Arretierdrehstellung versetzbar ist. Ferner kann es vorgesehen sein, dass das Einsatzteil durch Drehen um einen Winkel zwischen 45° und 135° von der Einsetzdrehstellung in die Arretierdrehstellung versetzbar ist. Beispielsweise kann der genannte Winkel 90°, insbesondere im Rahmen von Fertigungstoleranzen, betragen.

Der in der Einsetzdrehstellung in den Aufnahmeraum eingesetzte Schenkel kann während des Drehens des Einsatzteils in die Arretierdrehstellung beispielsweise mitführbar sein, so dass auch der in den Aufnahmeraum eingesetzte Schenkel bzw. der Bügel sowie gegebenenfalls der mit dem Bügel verbundene Schlosskörper eine Drehung um den Winkel zwischen der Einsetzdrehstellung und der Arretierdrehstellung ausführen kann bzw. können. Bei einer Drehung des Einsatzteils um 90° kann der Schenkel beispielsweise durch eine Bewegung in einer Ebene in das Einsatzteil eingesetzt werden, welche senkrecht zu einer Ebene ausgerichtet ist, in welcher sich ein Rahmen eines Zweirads erstreckt, an welchem die Halterung befestigt ist. Durch Drehen des Einsatzteils und des Bügels um 90° kann der Bügel in der Arretierdrehstellung hingegen innerhalb der Ebene angeordnet sein, in welcher sich auch der Rahmen des Zweirads erstreckt. Das Bügelschloss kann somit während einer Fahrt in einer Ausrichtung transportiert werden, in welcher sich das Bügelschloss nicht oder lediglich geringfügig seitlich über den Rahmen des Zweirads hinaus erstreckt, so dass ein Nutzer während der Fahrt nicht durch das an dem Rahmen gehaltene Bügelschloss beeinträchtigt wird.

Grundsätzlich kann es unabhängig von dem Winkel zwischen der Einsetzdrehstellung und der Arretierdrehstellung vorgesehen sein, dass sich das in der Halterung befestigte Bügelschloss in der Arretierdrehstellung in einer Ebene erstreckt, welche einer durch den Rahmen eines Zweirads definierten Ebene entspricht, an welchem die Halterung befestigt ist. Ferner kann sich das Bügelschloss in der Arretierdrehstellung des Einsatzteils in einer parallel zu einer solchen durch den Rahmen Ebene ausgerichteten Ebene erstrecken. Die Halterung kann somit derart an dem Rahmen befestigbar sein, dass die Längsachse parallel zu einem Rahmenabschnitt oder entlang eines Rahmenabschnitts ausgerichtet ist und der Schlosskörper eines in die Halterung eingesetzten Bügelschlosses sich in der Arretierdrehstellung in einer durch den Rahmen definierten Ebene oder parallel dazu erstreckt. Die durch den Rahmen definierte Ebene kann insbesondere durch ein Rahmendreieck definiert sein.

Das Einsatzteil kann bei einigen Ausführungsformen eine radial bezüglich der Drehachse nach außen wegragende Anschlagserhöhung aufweisen, welche in der Arretierdrehstellung an einer von dem Gehäuse gebildeten Anschlagsaussparung anschlägt. Durch einen solchen Anschlag kann ein Nutzer das Erreichen der Arretierdrehstellung haptisch wahrnehmen, so dass ein Überdrehen des Einsatzteils vermieden und eine korrekte Einstellung in der Arretierdrehstellung sichergestellt werden kann. Ferner kann durch die von dem Gehäuse gebildete Anschlagsaussparung auch eine etwaige, beispielsweise aufgrund von Fertigungstoleranzen entstehende axiale Relativbewegbarkeit zwischen dem Einsatzteil und dem Gehäuse in der Arretierdrehstellung unterbunden werden, um die Stabilität der Halterung in der Arretierdrehstellung weiter zu erhöhen.

Bei einigen Ausführungsformen kann sich das Einsatzteil axial bezüglich der Längsachse der Halterung beidseitig über das Gehäuse hinaus erstrecken und das Gehäuse an zueinander axial entgegengesetzten Endabschnitten des Gehäuses übergreifen. Insbesondere kann das Einsatzteil an den Endabschnitten des Gehäuses anliegen. Durch ein solches Übergreifen können das Einsatzteil und das Gehäuse axial relativ zueinander festgelegt sein, so dass ausschließlich rotatorische Relativbewegungen zwischen dem Einsatzteil und dem Gehäuse möglich sein können. Das Gehäuse kann einen innerhalb des Gehäuses angeordneten Teil des Einsatzteils dabei insbesondere hülsenartig umgreifen, wobei sich aus dem Gehäuse axial herauserstreckende Abschnitte des Einsatzteils das Gehäuse in radialer Richtung zumindest teilweise überdecken können, um axiale Relativbewegungen zwischen dem Gehäuse und dem Einsatzteil zu verhindern.

Bei einigen Ausführungsformen kann der Aufnahmeraum in einer Projektion auf eine zu der Längsachse senkrechte Ebene durch das Drehen des Einsatzteils bewegbar sein. Dazu kann beispielsweise ein in der Arretierdrehstellung definierter Mittelpunkt des Aufnahmeraums exzentrisch zu der Drehachse des Einsatzteils angeordnet sein, so dass sich dieser Mittelpunkt während einer Drehung des Einsatzteils entlang einer Kreisbahn um die Drehachse bewegen kann. Auch der in der Einsetzdrehstellung in den Aufnahmeraum eingesetzte Schenkel bzw. ein Mittelpunkt dessen Querschnittsfläche kann während des Drehens des Einsatzteils gemeinsam mit dem Aufnahmeraum bewegbar und beispielsweise entlang einer Kreisbahn um die Drehachse geführt werden.

Bei solchen Ausführungsformen kann sich die Position des Aufnahmeraums relativ zu dem Gehäuse infolge eines Drehens des Einsatzteils verändern. Dabei kann sich beispielsweise auch eine Querschnittsfläche des Aufnahmeraums infolge oder während der Drehung des Einsatzteils verändern, wobei sich die Erstreckung des Aufnahmeraums entlang zumindest einer Richtung insbesondere verringern kann, wenn das Einsatzteil von der Einsetzdrehstellung in die Arretierdrehstellung überführt wird. Infolge einer solchen Verringerung der Erstreckung des Aufnahmeraums kann beispielsweise ein in der Einsetzdrehstellung formschlüssig in den Aufnahmeraum eingesetzter Schenkel in der Arretierdrehstellung zuverlässig verspannt werden.

Der in der Einsetzdrehstellung in den Aufnahmeraum eingesetzte und in der Arretierdrehstellung in dem Aufnahmeraum verspannte Schenkel kann bei einigen Ausführungsformen exzentrisch zu der Drehachse positioniert sein. Folglich kann der Schenkel bei einer Drehung des Einsatzteils aus der Einsetzdrehstellung in die Arretierdrehstellung mitdrehen bzw. um die Drehachse des Einsatzteils versetzt werden. Insbesondere kann der Schenkel in und gemeinsam mit dem Aufnahmeraum bewegt werden, sofern der Aufnahmeraum durch das Drehen des Einsatzteils bewegbar ist. Beispielsweise kann der in den Aufnahmeraum eingesetzte Schenkel dadurch während der Drehung des Einsatzteils auf eine Innenseite des Gehäuses zu geführt werden, um in der Arretierdrehstellung des Einsatzteils zwischen einer Anlagefläche des Einsatzteils und der Innenseite des Gehäuses verspannt zu werden.

Bei einigen Ausführungsformen kann der in den Aufnahmeraum eingesetzte Schenkel bei einer Drehung des Einsatzteils mitführbar sein. Insbesondere kann ein Mittelpunkt einer Querschnittsfläche des Schenkels dabei entlang eines Kreisbogens um die Drehachse mitführbar sein. Der in der Arretierdrehstellung des Einsatzteils in dem Aufnahmeraum verspannte Schenkel kann dementsprechend exzentrisch bezüglich der Drehachse in den Aufnahmeraum einsetzbar sein, wenn sich das Einsatzteil in der Einsetzdrehstellung befindet.

Das Gehäuse kann bei einigen Ausführungsformen eine Einführschräge aufweisen, über welche der Schenkel während der Drehung des Einsatzteils in die Arretierdrehstellung führbar ist und an welcher der in der Arretierdrehstellung verspannte Schenkel anliegt. Eine solche Einführschräge kann sich dabei insbesondere an die bereits genannte Innenseite des Gehäuses anschließen oder von der Innenseite des Gehäuses gebildet sein, welche einer den Schenkel verspannenden Anlagefläche des Einsatzteils entgegengesetzt ist. Durch das Anliegen des Schenkels an der Einführschräge kann eine von der Anlagefläche in Richtung der Innenseite des Gehäuses auf den Schenkel ausgeübte Kraft zum Verspannen des Schenkels in dem Aufnahmeraum teilweise in eine quer und insbesondere senkrecht zu dieser Kraft wirkende Kraft umgeleitet werden, so dass der Schenkel entlang zweier quer und insbesondere senkrecht zueinander orientierten Richtungen in dem Aufnahmeraum verspannt werden kann, wenn sich das Einsatzteil in der Arretierdrehstellung befindet. Zudem kann der Schenkel während einer Drehung des Einsatzteils vereinfacht über eine solche Einführschräge in Anlage zu der Innenseite des Gehäuses gebracht werden.

Bei einigen Ausführungsformen kann das Einsatzteil eine U-förmige Aufnahme für den Schenkel bilden und den in den Aufnahmeraum eingesetzten Schenkel umgreifen. Das Einsatzteil kann den Aufnahmeraum somit dreiseitig begrenzen, wobei der Aufnahmeraum insbesondere in der Arretierdrehstellung des Einsatzteils einseitig durch das Gehäuse und/oder die bereits genannte Innenseite des Gehäuses begrenzt sein kann. Die vorstehend beschriebene, der Innenseite des Gehäuses in der Arretierdrehstellung entgegengesetzte Anlagefläche kann insbesondere durch einen Bodenabschnitt der U-förmigen Aufnahme gebildet sein, von welchem zwei weitere, den in den Aufnahmeraum eingesetzten Schenkel umgreifende Abschnitte der Aufnahme abstehen können.

Alternativ dazu kann es jedoch beispielsweise auch vorgesehen sein, dass das Einsatzteil den Aufnahmeraum lediglich einseitig oder zweiseitig begrenzt. Beispielsweise kann der Aufnahmeraum auch in der Einsetzdrehstellung zumindest einseitig von dem Gehäuse begrenzt sein, wobei das Einsatzteil von der Einsetzdrehstellung in die Arretierdrehstellung relativ zu einer solchen, von dem Gehäuse gebildeten Begrenzung des Aufnahmeraums verdreht werden kann.

Es kann bei einigen Ausführungsformen vorgesehen sein, dass das Einsatzteil einen Mitnehmer für den Schenkel bildet und dazu ausgebildet ist, den in den Aufnahmeraum eingesetzten Schenkel bei einer Drehung des Einsatzteils mitzunehmen. Beispielsweise kann ein im Querschnitt rechteckiger oder quadratischer Schenkel in der Einsetzdrehstellung in einer von dem Einsatzteil gebildeten U-förmigen Aufnahme anliegen, so dass der Schenkel durch Drehen des Einsatzteils ebenfalls gedreht und in dem Aufnahmeraum verspannt werden kann. Zudem kann dadurch ein in den Aufnahmeraum eingesetzter Schenkel bzw. der Bügel insgesamt bei einer Drehung des Einsatzteils mitgeführt werden, um den Bügel beispielsweise in eine durch einen Rahmen eines Zweirades, mit welchem die Halterung verbunden ist, definierte Ebene zu führen und in der Arretierdrehstellung zu verspannen.

Der Schenkel kann bei einigen Ausführungsformen durch eine Bewegung in einer Ebene in den Aufnahmeraum einsetzbar sein, welche senkrecht zu der Drehachse und/oder der Längsachse der Halterung orientiert ist. Insbesondere kann der Schenkel durch eine translatorische Bewegung entlang einer senkrecht zu der Drehachse und/oder der Längsachse der Halterung orientierten Einsetzrichtung in den Aufnahmeraum einsetzbar sein. Der Aufnahmeraum kann somit bei einigen Ausführungsformen aus einer senkrecht zu der Drehachse und/oder der Längsachse der Halterung ausgerichteten Richtung zugänglich sein, wenn sich das Einsatzteil in der Einsetzdrehstellung befindet. Dadurch kann der Schenkel in einfacher Weise in den Aufnahmeraum eingesetzt werden und muss nicht entlang der Längsachse in den Aufnahmeraum eingeschoben werden, wobei beispielsweise geringfügige Abweichungen von der Längsachse während eines solchen Einschiebens zu einem Verkanten bzw. Anschlagen des Schenkels führen könnten. Das Einsetzen des Schenkels in den Aufnahmeraum kann somit für den Nutzer möglichst komfortabel gestaltet werden.

Bei einigen Ausführungsformen können das Gehäuse und das Einsatzteil einen jeweiligen sich entlang der Längsachse der Halterung erstreckenden Längsschlitz aufweisen, wobei die Längsschlitze in der Einsetzdrehstellung zueinander fluchtend angeordnet sein können und wobei der Schenkel durch die Längsschlitze in den Aufnahmeraum einsetzbar sein kann. Beispielsweise kann der Schenkel durch eine translatorische Bewegung entlang einer senkrecht zu der Längsachse ausgerichteten Einsetzrichtung durch die Längsschlitze in den Aufnahmeraum einsetzbar sein. Es kann auch vorgesehen sein, dass das Einsatzteil während einer Montage der Halterung durch den Längsschlitz des Gehäuses in das Gehäuse eingesetzt wird, wobei das Gehäuse insbesondere elastisch verformbar sein kann, um den Längsschlitz gegebenenfalls während dieses Einsetzens des Einsatzteils erweitern zu können.

Ferner kann es bei einigen Ausführungsformen vorgesehen sein, dass das Einsatzteil den Längsschlitz des Gehäuses in der Arretierdrehstellung zumindest teilweise, insbesondere vollständig, versperrt. Der Längsschlitz des Gehäuses kann somit einen Zugang zu dem Aufnahmeraum in der Einsetzdrehstellung des Einsatzteils bieten, um den Schenkel in den Aufnahmeraum einsetzen zu können, wobei dieser Zugang in der Arretierdrehstellung durch das Einsatzteil versperrt sein kann. Ein unbeabsichtigtes Lösen eines eingesetzten Bügelschlosses aus der Halterung, beispielsweise infolge von während einer Fahrt auftretenden Erschütterungen, kann somit zuverlässig verhindert werden. Beispielsweise kann der Längsschlitz des Gehäuses in der Arretierdrehstellung durch einen an die bereits genannte Anlagefläche angrenzenden und sich insbesondere senkrecht zu der Anlagefläche erstreckenden Abschnitt des Einsatzteils versperrt sein. Der Aufnahmeraum kann in der Arretierdrehstellung in einer Projektion auf eine zu der Längsachse senkrechte Ebene umfänglich und/oder vierseitig begrenzt und insbesondere vollständig geschlossen sein.

Das Einsatzteil kann bei einigen Ausführungsformen eine Schlosskörperaufnahme umfassen, in welche der Schlosskörper einsetzbar ist. Insbesondere kann es dabei vorgesehen sein, dass in einem Geschlossenzustand des Bügelschlosses, in welchem der Schenkel und/oder der Bügel mit dem Schlosskörper verbunden ist, der Schenkel in den Aufnahmeraum und der Schlosskörper in die Schlosskörperaufnahme einsetzbar ist.

Die Schlosskörperaufnahme kann somit dazu dienen, den Schlosskörper in der Halterung zu halten und insbesondere Bewegungen des Schlosskörpers senkrecht zu der Längsachse der Halterung oder Drehbewegungen um die Längsachse zu begrenzen. Um das Bügelschloss in dem Geschlossenzustand in die Halterung einsetzen zu können, kann sich der bereits genannte Längsschlitz insbesondere axial entlang der Längsachse der Halterung bis in die Schlosskörperaufnahme hinein erstrecken, so dass der Schenkel durch den Längsschlitz in den Aufnahmeraum und der mit dem Schenkel verbundene Schlosskörper in die Schlosskörperaufnahme einsetzbar sein können. Dadurch kann das gesamte Bügelschloss in einem einzigen Schritt in die Halterung eingesetzt werden, wenn sich das Einsatzteil in der Einsetzdrehstellung befindet, ohne dass beispielsweise nach einem Einsetzen des Schenkels in den Aufnahmeraum noch ein Schritt zum Verbinden des Bügels mit dem Schlosskörper erforderlich ist.

Die Schlosskörperaufnahme kann bei einigen Ausführungsformen in Richtung der Längsachse zulaufend und insbesondere konisch zulaufend ausgebildet sein. Eine solche zulaufende und/oder sich verjüngende Ausbildung der Schlosskörperaufnahme kann insbesondere die Aufnahme von Schlosskörpern mit unterschiedlichen Formen ermöglichen, wobei ein Schlosskörper in Abhängigkeit von seiner Form unterschiedlich tief in die Schlosskörperaufnahme eingeführt werden kann. Verschieden ausgebildete Schlosskörper können somit gleichermaßen innerhalb der Aufnahme anliegend gehalten sein, so dass mittels der Halterung verschieden ausgebildete Bügelschlösser an einem Zweirad befestigt werden können.

Ferner kann das Einsatzteil bei einigen Ausführungsformen durch Drehen des in die Schlosskörperaufnahme eingesetzten Schlosskörpers von der Einsetzdrehstellung in die Arretierdrehstellung drehbar sein. Die Schlosskörperaufnahme kann dabei insbesondere derart ausgebildet sein, dass der eingesetzte Schlosskörper senkrecht zu der Drehachse des Einsatzteils und/oder der Längsachse der Halterung ausgerichtet ist. Dies ermöglicht es, den Schlosskörper als Hebel zum Übertragen einer Drehung auf das Einsatzteil zu nutzen und die zum Verspannen des Schenkels in der Arretierdrehstellung erforderliche Kraft aufzubringen. Indem die Schlosskörperaufnahme zudem gegebenenfalls zulaufend ausgebildet sein kann, können verschieden ausgebildete Schlosskörper als Hebel genutzt werden und insbesondere auch derartig ausgebildete Schenkel mit dem Einsatzteil mitgedreht werden, für welche das Einsatzteil nicht als Mitnehmer wirken kann.

Die Drehachse kann bei einigen Ausführungsformen parallel zu einer Richtung oder entlang einer Richtung ausgerichtet sein, in welcher sich der mit dem Schlosskörper verbundene und in den Aufnahmeraum eingesetzte Schenkel ausgehend von dem Schlosskörper erstreckt.

Bei einigen Ausführungsformen kann ein Adapter zur Verwendung der Halterung mit einem weiteren Bügelschloss, dessen Bügel sich von dem Bügel des zugeordneten Bügelschlosses unterscheidet, vorgesehen sein, welcher wahlweise an dem Gehäuse anbringbar ist, wobei ein Schenkel des weiteren Bügelschlosses bei eingebrachtem Adapter in der Arretierdrehstellung zwischen dem Adapter und dem Einsatzteil verspannbar sein kann. Insbesondere kann der Adapter dabei an dem Gehäuse einclipsbar sein. Ferner kann der Schenkel insbesondere zwischen dem Adapter und der bereits genannten, von dem Einsatzteil gebildeten Anlagefläche verspannbar sein, wenn der Adapter in das Gehäuse eingesetzt ist. Der Adapter kann dazu insbesondere an der bereits genannten Innenseite des Gehäuses anbringbar sein.

Ein solcher Adapter kann es beispielsweise ermöglichen, in der Arretierdrehstellung einen Abstand zwischen der Anlagefläche und dem Gehäuse zu verringern, so dass ein Schenkel mit einer von dem Bügel des zugeordneten Bügelschlosses verschiedenen Querschnittsfläche und insbesondere einer kleineren Querschnittsfläche in dem Aufnahmeraum durch Drehen des Einsatzteils aus der Einsetzdrehstellung in die Arretierdrehstellung verspannt werden kann. Die Halterung kann somit auf einfache Weise an verschiedene Bügelschlösser und die Ausbildung deren Bügel angepasst werden, um die Halterung flexibel zum Befestigen verschiedener Bügelschlösser nutzen zu können. Beispielsweise können dadurch Schenkel mit verschiedenen Querschnittsformen, beispielsweise kreisförmige, rechteckige oder quadratische Schenkel, und insbesondere im Querschnitt kreisförmige Schenkel verschiedenen Durchmessers mittels der Halterung an einem Zweirad befestigt werden. Dazu können insbesondere verschiedene, jeweiligen Bügeln zugeordnete Adapter wahlweise in dem Gehäuse einsetzbar sein. Insbesondere eine Befestigung des Adapters durch Einclipsen kann einen schnellen Umbau zum Anpassen der Halterung ermöglichen. Zudem kann der Adapter eine Einführschräge aufweisen, welche bei eingesetztem Adapter in Form der bereits genannten Einführschräge des Gehäuses wirken kann, um den eingesetzten Schenkel in zwei Richtungen in dem Aufnahmeraum verspannen zu können.

Die Halterung kann bei einigen Ausführungsformen ein Blockierelement aufweisen, durch welches das Einsatzteil in der Arretierdrehstellung blockierbar ist. Das Blockierelement kann das Einsatzteil somit gegen eine Drehung aus der Arretierdrehstellung in die Einsetzdrehstellung sperren, so dass ein unbeabsichtigtes Öffnen der Halterung verhindert werden kann. Dadurch kann sichergestellt werden, dass das Einsatzteil zuverlässig in der Arretierdrehstellung bleibt und der Schenkel in dem Aufnahmeraum verspannt ist, sofern das Einsatzteil nicht bewusst durch einen Nutzer für eine Drehung in die Einsetzdrehstellung freigegeben und in die Einsetzdrehstellung überführt wird.

Bei einigen Ausführungsformen kann das Blockierelement axial bezüglich der Längsachse in Richtung einer Blockierstellung vorgespannt sein. Insbesondere kann das Blockierelement mittels einer an dem Gehäuse abgestützten Feder in Richtung der Blockierstellung vorgespannt sein. In der Blockierstellung kann das Einsatzteil durch das Blockierelement gegen eine Drehung aus der Arretierdrehstellung in die Einsetzdrehstellung gesperrt sein, wobei eine solche Drehung durch Verdrängen des Blockierelements entgegen der Vorspannung freigebbar sein kann. Das Blockierelement kann dabei insbesondere entgegen der Vorspannung axial zurückdrängbar sein, um axial aus einer von dem Einsatzteils während einer Drehung aus der Arretierdrehstellung in die Einsetzdrehstellung beschriebenen Bewegungsbahn herausgeführt zu werden. In der Blockierstellung kann das Blockierelement hingegen axial in die Bewegungsbahn des Einsatzteils eingreifen. Dabei kann die Vorspannung insbesondere mittels einer Feder erzeugt werden, die beispielsweise in einer Federaufnahme des Gehäuses abgestützt und von der Federaufnahme umgeben sein kann.

Ferner kann das Blockierelement bei einigen Ausführungsformen einen Betätigungsabschnitt aufweisen, wobei das Blockierelement durch Betätigen des Betätigungsabschnitts von der Blockierstellung in eine axial gegenüber der Blockierstellung versetzte Freigabestellung überführbar sein kann, in welcher das Einsatzteil für eine Drehung in Richtung der Einsetzdrehstellung, insbesondere in die Einsetzdrehstellung, freigegeben ist.

Durch bewusstes Betäten des Betätigungsabschnitts kann ein Nutzer das Blockierelement somit in die Freigabestellung überführen, um das Einsatzteil in die Einsetzdrehstellung drehen und beispielsweise ein in die Halterung eingesetztes Bügelschloss aus der Halterung entnehmen und zum Sichern eines Zweirads nutzen zu können. Dabei kann der Betätigungsabschnitt beispielsweise als ein Druccknopf ausgebildet sein, mittels dessen das Blockierelement unmittelbar axial bewegbar sein kann. Alternativ dazu kann das Blockierelement beispielsweise mittels des Betätigungsabschnitts dreh- oder schwenkbar sein, wobei eine Drehbewegung in eine axiale Bewegung des Blockierelements überführbar oder umlenkbar sein kann. Der Betätigungsabschnitt kann dabei beispielsweise als ein abstehender Hebel ausgebildet sein, um das Blockierelement in Drehung versetzen zu können.

Es kann bei einigen Ausführungsformen vorgesehen sein, dass das Einsatzteil in Drehstellungen zwischen der Arretierdrehstellung und der Einsetzdrehstellung eine Bewegung des Blockierelements in die Blockierstellung verhindert. Somit kann das Einsatzteil nach einem Überführen des Blockierelements in die Freigabestellung gedreht werden, ohne dass das Blockierelement dabei gesondert, beispielsweise durch Betätigen des Betätigungsabschnitts, in der Freigabestellung gehalten werden muss. Ein Nutzer muss somit lediglich den Betätigungsabschnitt betätigen, um das Blockierelement in die Freigabestellung zu überführen, und das Einsatzteil geringfügig gegenüber der Arretierdrehstellung verdrehen, woraufhin eine Bewegung des Blockierelements in die Blockierstellung gesperrt ist und das Einsatzteil in die Einsetzdrehstellung gedreht werden kann. Dazu kann das Einsatzteil beispielsweise in Drehstellungen zwischen der Arretierdrehstellung und der Einsetzdrehstellung axial in Flucht zu dem Blockierelement oder zumindest einem Abschnitt des Blockierelements angeordnet sein.

Bei einigen Ausführungsformen kann das Blockierelement durch eine Drehbewegung um eine parallel zu der Drehachse ausgerichtete oder der Drehachse entsprechende Betätigungsachse aus der Blockierstellung in die Freigabestellung überführbar sein. Dazu kann das Blockierelement insbesondere den bereits genannten Betätigungsabschnitt aufweisen, welcher beispielsweise als ein radial bezüglich der Betätigungsachse wegragender Hebel ausgebildet sein kann. Ein Nutzer kann folglich durch Betätigen dieses Hebels eine Drehung auf das Blockierelement übertragen, um das Blockierelement in die Freigabestellung zu überführen.

Ferner kann das Blockierelement bei einigen Ausführungsformen einen Verdrängungsabschnitt aufweisen, mit welchem das Blockierelement in der Arretierdrehstellung des Einsatzteils in eine in dem Einsatzteil ausgebildete Verdrängungsvertiefung eingreifen kann, wobei die Verdrängungsvertiefung und der Verdrängungsabschnitt eine jeweilige Antriebsschräge aufweisen können, welche derart zusammenwirken, dass das Blockierelement durch die Drehbewegung axial aus der Verdrängungsvertiefung herausdrängbar ist.

Das Zusammenwirken der jeweiligen Antriebsschrägen kann es dabei insbesondere ermöglichen, eine Drehbewegung des Blockierelements um eine parallel zu der Drehachse des Einsatzteils ausgerichtete Betätigungsachse in eine translatorische Bewegung des Blockierelements entlang der Längsachse zu überführen. Insbesondere kann das Blockierelement durch das Zusammenwirken des Verdrängungsabschnitts mit der Verdrängungsvertiefung aus der Blockiervertiefung heraus bis in die Freigabestellung drängbar sein. Der Verdrängungsabschnitt kann ferner bei einem Erreichen der Arretierdrehstellung durch das Einsatzteil unmittelbar aufgrund einer Vorspannung des Blockierelements in Eingriff zu der Verdrängungsvertiefung gelangen. Das Blockierelement kann somit bei Erreichen der Arretierdrehstellung automatisch in die Blockierstellung überführt werden, in welcher das Einsatzteil einerseits zuverlässig gegen eine Drehung in die Einsetzdrehstellung blockiert ist, das Einsatzteil jedoch für eine solche Drehung durch Betätigen des Blockierelements bzw. dessen Betätigungsabschnitts unmittelbar und einfach von einem Nutzer freigegeben werden kann.

Ferner können die Verdrängungsvertiefung und der Verdrängungsabschnitt bei einigen Ausführungsformen zwei jeweilige Antriebsschrägen aufweisen, welche derart zusammenwirken, dass das Blockierelement in der Arretierdrehstellung unabhängig von einer Richtung, entlang welcher die Drehbewegung um die Betätigungsachse erfolgt, axial aus der Verdrängungsvertiefung herausdrängbar ist.

Eine solche Ausbildung der Verdrängungsvertiefung und des Verdrängungsabschnitts mit zwei jeweiligen Antriebsschrägen ermöglicht es einem Nutzer, das Blockierelement bzw. dessen Betätigungsabschnitt in beliebiger Richtung zu betätigen, um das Blockierelement aus der Blockierstellung in die Freigabestellung zu überführen. Ein Nutzer kann den Betätigungsabschnitt folglich komfortabel und flexibel in Abhängigkeit von den jeweiligen Gegebenheiten betätigen, ohne über die korrekte Betätigung des Betätigungsabschnitts nachdenken zu müssen.

Alternativ zu einer Drehbewegung kann es bei einigen Ausführungsformen vorgesehen sein, dass das Blockierelement durch eine Schieb- und/oder Ziehbewegung entlang einer senkrecht zu der der Längsachse der Halterung orientierten Richtung durch das Zusammenwirken von Antriebsschrägen eines Verdrängungsabschnitts und einer Verdrängungsvertiefung axial entlang der Längsachse aus der Verdrängungsvertiefung herausdrängbar ist.

Das Blockierelement kann bei einigen Ausführungsformen einen Anschlagabschnitt aufweisen, welcher bei Erreichen der Freigabestellung an einer Begrenzung des Gehäuses anschlägt. Der Anschlagabschnitt kann entsprechend an der Begrenzung anschlagen, wenn das Blockierelement aus der Blockierstellung in die Freigabestellung überführt wird und die Freigabestellung erreicht. Insbesondere kann durch einen solchen Anschlagabschnitt eine Drehbewegung des Blockierelements begrenzt werden, um ein Überdrehen des Blockierelements über das Erreichen der Freigabestellung hinaus zu verhindern. Der Anschlagabschnitt kann dazu insbesondere als ein radial bezüglich einer Betätigungsachse des Blockierelements wegragender Abschnitt vorgesehen sein, welcher infolge der Drehbewegung an dem Innengehäuse anschlägt. Das Innengehäuse kann ferner insbesondere zwei solcher Begrenzungen aufweisen, so dass der Anschlagabschnitt des Blockierelements in Abhängigkeit von der Richtung der Drehbewegung des Blockierelements an einer jeweiligen dieser Begrenzungen anschlägt, wenn das Blockierelement die Freigabestellung erreicht. Ferner kann der Anschlagabschnitt dem bereits genannten Verdrängungsabschnitt des Blockierelements entgegengesetzt angeordnet sein.

Bei einigen Ausführungsformen kann das Einsatzteil eine Rastvertiefung aufweisen, in welche das Blockierelement in der Einsetzdrehstellung eingreift, wobei das Blockierelement durch Drehen des Einsatzteils aus der Einsetzdrehstellung in die Arretierdrehstellung aus der Rastvertiefung drängbar sein kann. Auch in der Einsetzdrehstellung kann das Einsatzteil somit durch das Blockierelement gegen ungewollte Drehungen stabilisiert sein. Das Blockierelement kann insbesondere entgegen einer Vorspannung axial bezüglich der Längsachse der Halterung aus der Rastvertiefung herausdrängbar sein, so dass eine Kraft aufgebracht werden muss, um das Einsatzteil aus der Arretierdrehstellung heraus zu drehen. Ein Nutzer kann den Schenkel somit komfortabel in den Aufnahmeraum einsetzen, ohne dass das Einsatzteil währenddessen ungewollt aus der Einsetzdrehstellung verdrehen kann. Im Unterschied zu der Arretierdrehstellung ist das Einsatzteil jedoch bei solchen Ausführungsformen nicht durch das Blockierelement blockiert, sondern das Blockierelement kann durch eine Drehung des Einsatzteils zurückgedrängt werden. Dazu können die Rastvertiefung und das Blockierelement insbesondere mit jeweiligen zusammenwirkenden Schrägen ausgebildet sein. Zudem kann die Rastvertiefung insgesamt von einer schräg bezüglich der Längsachse verlaufenden Fläche des Einsatzteils gebildet sein.

Die Halterung kann ferner bei einigen Ausführungsformen ein Verbindungselement aufweisen, welches an einem Rahmen des Zweirads befestigbar ist, wobei das Gehäuse an dem Verbindungselement fixierbar sein kann. Insbesondere kann das Gehäuse an dem Verbindungselement verschraubbar sein. Das Verbindungselement kann das Gehäuse beispielsweise zweiseitig umgreifen, jedoch in einem Winkelbereich von zumindest 90° einen Zugang zu dem Gehäuse ermöglichen, so dass das in die Halterung eingesetzte Bügelschloss bzw. dessen Bügel gemeinsam mit dem Einsatzteil von der Einsetzdrehstellung in die Arretierdrehstellung drehbar sein kann.

Das Verbindungselement kann bei einigen Ausführungsformen in einer ersten Verbindungsstellung und in einer zweiten Verbindungstellung an dem Rahmen des Zweirads befestigbar ist, wobei das Gehäuse in der ersten Verbindungsstellung und in der zweiten Verbindungsstellung des Verbindungselements an dem Verbindungselement fixierbar sein kann, und wobei das Verbindungselement durch eine Drehung um 180° um eine senkrecht zu der Längsachse der Halterung orientierte erste Einstellachse und durch eine Drehung um 90° um eine zu der Längsachse der Halterung parallele oder der Längsachse entsprechende zweite Einstellachse von der ersten Verbindungstellung in die zweite Verbindungsstellung überführbar sein kann. Insbesondere können es die beiden Verbindungstellungen des Verbindungselements ermöglichen, die Halterung wahlweise als Seitenhalter, so dass die Halterung parallel versetzt zu einer durch den Rahmen des Zweirads definierten Ebene angeordnet ist, oder als Senkrechthalter zu verwenden, um die Halterung in der durch den Rahmen des Zweirads definierten Ebene anordnen zu können. Ein Nutzer kann somit flexibel wählen, wie die Halterung an dem Rahmen befestigt wird, wobei der Bügel des in die Halterung eingesetzten Bügelschlosses oder des in die Halterung eingesetzten weiteren Bügelschlosses bei einer Verwendung als Senkrechthalter in der Arretierdrehstellung des Einsatzteils in der durch den Rahmen des Zweirads definierten Ebene und bei einer Verwendung als Seitenhalter in einer dazu parallelen Ebene angeordnet sein kann.

Der Schenkel kann bei einigen Ausführungsformen in der ersten Verbindungsstellung des Verbindungselements und in der zweiten Verbindungsstellung des Verbindungselements bei an dem Verbindungselement fixiertem Gehäuse in gleicher Weise, insbesondere entlang einander entsprechenden oder zueinander parallelen Richtungen, in den Aufnahmeraum einsetzbar sein. Die Halterung kann somit insbesondere unabhängig von einer Verwendung als Seitenhalter oder einer Verwendung als Seitenhalter im Wesentlichen identisch zu bedienen sein, wobei der Schenkel insbesondere entlang der bereits genannten Einsetzrichtung in den Aufnahmeraum einsetzbar sein kann.

Bei einigen Ausführungsformen kann das Verbindungselement zumindest eine Befestigungsöffnung und das Gehäuse zumindest einen Befestigungskanal aufweisen, wobei das Gehäuse mittels eines durch die Befestigungsöffnung und den Befestigungskanal eingeführten Befestigungsmittels an dem Verbindungselement fixierbar sein kann, wobei die Befestigungsöffnung und der Befestigungskanal in der ersten Verbindungsstellung und in der zweiten Verbindungsstellung des Verbindungselements in einer zu der Längsachse der Halterung senkrechten Ebene um 45° versetzt zu einer Einsetzrichtung, entlang welcher der Schenkel in den Aufnahmeraum einsetzbar ist, ausgerichtet sein können. Insbesondere können die Befestigungsöffnung und der Befestigungskanal um 45° in Richtung des Rahmens zu der Einsetzrichtung versetzt ausgerichtet sein. Die Einsetzrichtung kann ferner insbesondere der bereits zuvor genannten Einsetzrichtung entsprechen, welche in einer zu der Längsachse der Halterung senkrechten Ebene verläuft. Bei einer solchen Ausrichtung der Befestigungsöffnung ändert sich deren Orientierung bei einer Drehung des Verbindungselements um die bereits genannte erste Einstellachse insbesondere um 90° in Bezug auf die ebenfalls bereits genannte zweite Einstellachse. Wird das Verbindungselement sodann um 90° um die zweite Einstellachse in die zweite Verbindungsstellung gedreht, entsprechen sich die Ausrichtung der Befestigungsöffnung in der ersten Verbindungsstellung und in der zweiten Verbindungsstellung. Das Gehäuse kann daher in identischer Weise in der ersten Verbindungsstellung und in der zweiten Verbindungsstellung an dem Verbindungselement fixiert werden. Insbesondere kann das Verbindungselement zwei zueinander parallel ausgerichtete Befestigungsöffnungen und das Gehäuse zwei zueinander parallel ausgerichtete Befestigungskanäle aufweisen. Das Befestigungselement kann eine Schraube sein.

Alternativ dazu kann das Verbindungselement bei einigen Ausführungsformen zumindest eine Befestigungsöffnung und das Gehäuse zumindest zwei Befestigungskanäle aufweisen, welche um 90° um die Längsachse der Halterung zueinander versetzt angeordnet sind, wobei das Gehäuse mittels eines durch die Befestigungsöffnung in einen jeweiligen der Befestigungskanäle eingeführten Befestigungsmittels wahlweise in einer ersten Befestigungsstellung oder in einer zweiten Befestigungsstellung an dem Verbindungselement befestigbar sein kann. Auch durch zwei derartige Befestigungsstellungen, die um 90° zueinander versetzt sind, kann die Halterung sowohl als Senkrechthalter als auch als Seitenhalter genutzt werden. Das Verbindungselement kann in zueinander um 90° versetzten Stellungen an dem Rahmen angebracht werden, wobei das Gehäuse in beiden Fällen aufgrund der ebenfalls um 90° versetzten Befestigungskanäle über das Verbindungselement mit dem Rahmen verbunden werden kann.

Ferner kann das Gehäuse bei einer Ausbildung mit zueinander um 90° versetzten Befestigungskanälen bei einigen Ausführungsformen in einer ersten Verbindungsstellung des Verbindungselements in der ersten Befestigungsstellung an dem Verbindungselement und in einer zweiten Verbindungsstellung des Verbindungselements in der zweiten Befestigungsstellung an dem Verbindungselement fixierbar sein, wobei das Verbindungselement durch eine Drehung um 180° um eine senkrecht zu der Längsachse der Halterung orientierte erste Einstellachse und durch eine Drehung um 90° um eine zu der Längsachse der Halterung parallele oder der Längsachse entsprechende zweite Einstellachse von der ersten Verbindungsstellung in die zweite Verbindungsstellung überführbar sein kann. Beispielsweise kann das Verbindungselement in der ersten Verbindungsstellung in einer durch den Rahmen des Zweirads definierten Ebene an dem Rahmen befestigbar sein. Durch eine Drehung um 90° um eine zu der Längsachse der Halterung parallele Achse, welche parallel zu dem Rahmen des Zweirads verlaufen kann, kann das Verbindungselement somit in eine senkrechte Ausrichtung zu der durch den Rahmen definierten Ebene gelangen. Wird das Verbindungselement daraufhin um 180° um eine zu der Längsachse senkrecht orientierte erste Einstellachse gedreht, kann das Gehäuse aufgrund der um 90° zueinander versetzten Befestigungskanäle derart an dem Verbindungselement befestigt werden, dass sich die Ausrichtung des Einsatzteils in der Einsetzdrehstellung und in der Arretierdrehstellung im Vergleich zu einer Verbindung des Gehäuses mit dem Verbindungelement in der ersten Befestigungsstellung nicht verändert.

Bei einigen Ausführungsformen kann der Schenkel in der ersten Befestigungsstellung des Gehäuses und in der zweiten Befestigungsstellung des Gehäuses in gleicher Weise, insbesondere entlang einander entsprechenden oder zueinander parallelen Richtungen, in den Aufnahmeraum einsetzbar sein.

Das Verbindungselement kann bei einigen Ausführungsformen mittels zumindest eines Befestigungsbandes an dem Rahmen des Zweirads befestigbar sein, wobei das Verbindungselement zumindest einen Bandführungskanal aufweisen kann, in und/oder durch welchen ein um den Rahmen geführtes erstes Ende des Befestigungsbands ein- und/oder durchsteckbar ist, wobei das Befestigungsband in dem Befestigungskanal fixierbar sein kann. Insbesondere kann das erste Ende gegen ein Zurückführen aus dem Befestigungskanal fixierbar sein, so dass das Verbindungselement mittels des Befestigungsbands sicher an dem Rahmen des Zweirads befestigt werden kann. Die Fixierung des Verbindungselements an dem Rahmen mittels eines solchen Befestigungsbands ermöglicht es insbesondere, die Halterung flexibel mit verschiedenen Zweirädern zu verwenden und an verschiedenen Rahmen, insbesondere Rahmen verschiedenen Durchmessers, zu befestigen. Insbesondere kann das Verbindungselement dabei mittels zumindest zweier und/oder genau zweier entlang der Längsachse der Halterung versetzter Befestigungsbänder an dem Rahmen des Zweirads befestigbar sein.

Bei einigen Ausführungsformen kann das Befestigungsband durch innerhalb des Verbindungselements angeordnete Fixierschrauben in dem Befestigungskanal fixierbar sein, wobei das Gehäuse und das Einsatzteil zueinander in der Einsetzdrehstellung oder der Arretierdrehstellung fluchtende Eingriffsöffnungen aufweisen können, durch welche die Fixierschrauben zugänglich sind. Durch diese Eingriffsöffnungen kann folglich ein Zugang zu den Fixierschrauben bei vollständig montierter Halterung ermöglicht werden, um die Halterung mittels des Befestigungsbands sicher an dem Rahmen des Zweirads befestigen zu können.

Beispielsweise können die Fixierschrauben in der ersten Befestigungsstellung in der Arretierdrehstellung und in der zweiten Befestigungsstellung in der Einsetzdrehstellung zugänglich sein. Die Fixierschrauben können in der zweiten Befestigungsstellung insbesondere durch die bereits genannten Längsschlitze zugänglich sein, welche sich in der Einsetzdrehstellung in Flucht zueinander befinden und als Eingriffsöffnungen fungieren können. Das Einsatzteil und das Gehäuse können ferner jeweilige Eingriffsöffnungen aufweisen, welche in der ersten Befestigungsstellung zueinander fluchtend angeordnet sein können, wenn sich das Einsatzteil in der Arretierdrehstellung befindet, so dass die Fixierschrauben mittels eines Werkzeugs zugänglich sein können. Insbesondere können die Eingriffsöffnungen dabei an der bereits genannten Anlagefläche und der Innenseite des Gehäuses angeordnet sein.

Das Verbindungselement kann ferner bei einigen Ausführungsformen eine taschenartige Aufnahme aufweisen, in welche das um den Rahmen geführte erste Ende des Befestigungsbands einführbar ist. Das um den Rahmen geführte und aus dem Befestigungskanal herausragende erste Ende des Befestigungsbandes kann somit in der Aufnahme verstaut werden. Auch etwaige scharfe Kanten des ersten Endes des Befestigungsbands, insbesondere eines aufgrund einer verhältnismäßig großen Länge von einem Nutzer abgeschnittenen Befestigungsbands, können in der Aufnahme aufgenommen werden, um eventuelle Verletzungen eines Nutzers aufgrund solcher Kanten während des Gebrauchs der Halterung ausschließen zu können.

Die Erfindung wird im Folgenden rein beispielhaft anhand eines Ausführungsbeispiels unter Bezugnahme auf die Zeichnungen erläutert.

Es zeigen:
- Fig. 1A und 1B: eine jeweilige perspektivische Darstellung einer Halterung zum Befestigen eines zugeordneten Bügelschlosses an einem Zweirad in einer Einsetzdrehstellung eines Einsatzteils der Halterung und in einer Arretierdrehstellung des Einsatzteils,
- Fig. 2A bis 2D: eine Frontansicht, eine Rückansicht, eine Seitansicht sowie eine Unteransicht der Halterung,
- Fig. 3A bis 3D: eine jeweilige Explosionsdarstellung der Halterung und deren Komponenten,
- Fig. 4A bis 4C: eine Längsschnittdarstellung der Halterung und des in der Halterung aufgenommenen zugeordneten Bügelschlosses, eine Querschnittdarstellung der Halterung und des aufgenommenen zugeordneten Bügelschlosses in der Einsetzdrehstellung des Einsatzteils und eine Querschnittdarstellung der Halterung und des aufgenommenen zugeordneten Bügelschlosses in der Arretierdrehstellung des Einsatzteils,
- Fig. 5A bis 5C: eine Längsschnittdarstellung der Halterung und eines in der Halterung aufgenommenen weiteren Bügelschlosses, eine Querschnittdarstellung der Halterung und des aufgenommenen weiteren Bügelschlosses in der Einsetzdrehstellung des Einsatzteils und eine Querschnittdarstellung der Halterung und des aufgenommenen weiteren Bügelschlosses in der Arretierdrehstellung des Einsatzteils,
- Fig. 6A und 6B: eine jeweilige Frontansicht des Einsatzteils in der Einsetzdrehstellung und in der Arretierdrehstellung,
- Fig. 7: eine perspektivische Rückansicht des Einsatzteils in der Arretierdrehstellung und eines Blockierelements, welches das Einsatzteil in der Arretierdrehstellung gegen eine Drehung in Richtung der Einsetzdrehstellung blockiert,
- Fig. 8: eine perspektivische Ansicht eines Gehäuses der Halterung,
- Fig. 9A bis 9C: jeweilige perspektivische Ansichten der Halterung zur Veranschaulichung eines Überführens eines Verbindungselements der Halterung, über welches das Gehäuse an einem Rahmen des Zweirads befestigbar ist, aus einer ersten Verbindungsstellung in eine zweite Verbindungsstellung,
- Fig. 10A bis 10C: jeweilige perspektivische Ansichten der Halterung zur Veranschaulichung deren Verbindung mit einem Rahmen eines Zweirads in der ersten Verbindungsstellung und der zweiten Verbindungsstellung des Verbindungselements,
- Fig. 11: eine perspektivische Darstellung des Verbindungselements
- Fig. 12: eine Seitenansicht des zugeordneten Bügelschlosses,
- Fig. 13: eine perspektivische Ansicht des in der Halterung aufgenommenen zugeordneten Bügelschlosses in der Arretierdrehstellung des Einsatzteils,
- Fig. 14: eine perspektivische Ansicht eines Gehäuses einer weiteren Ausführungsform der Halterung und
- Fig. 15A bis 15C: jeweilige perspektivische Ansichten der Halterung gemäß der weiteren Ausführungsform zur Veranschaulichung eines Überführens eines Verbindungselements der Halterung aus einer ersten Verbindungsstellung in eine zweite Verbindungsstellung.

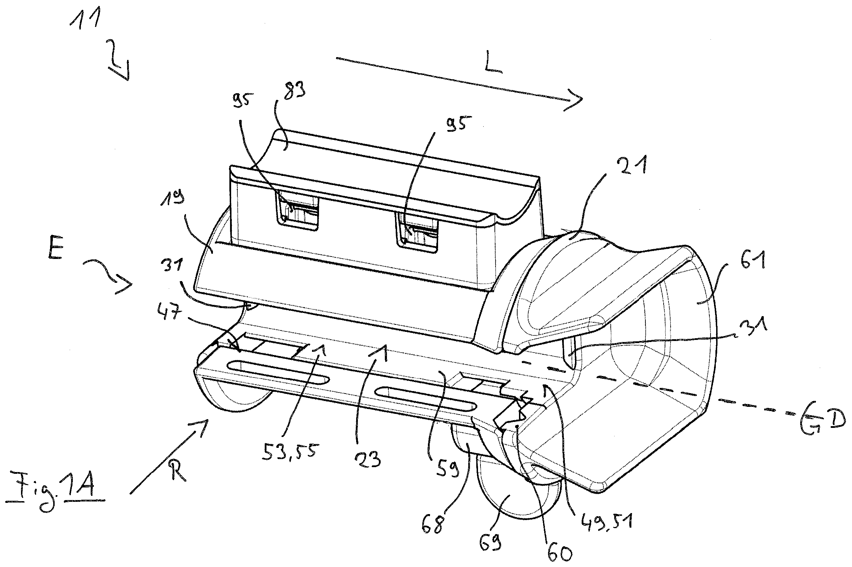

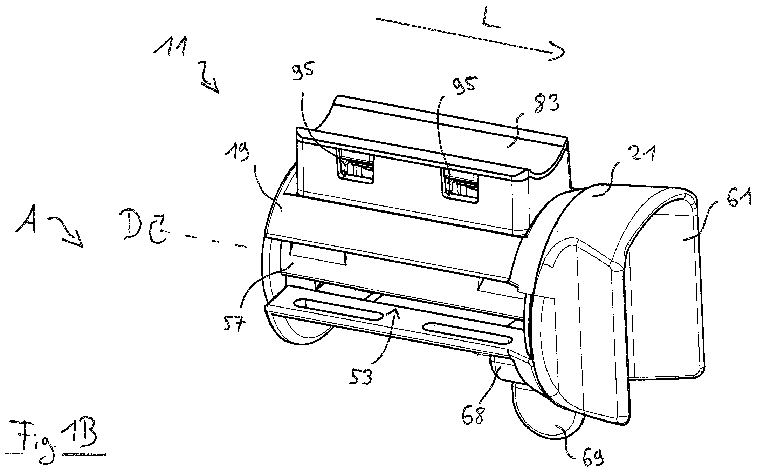

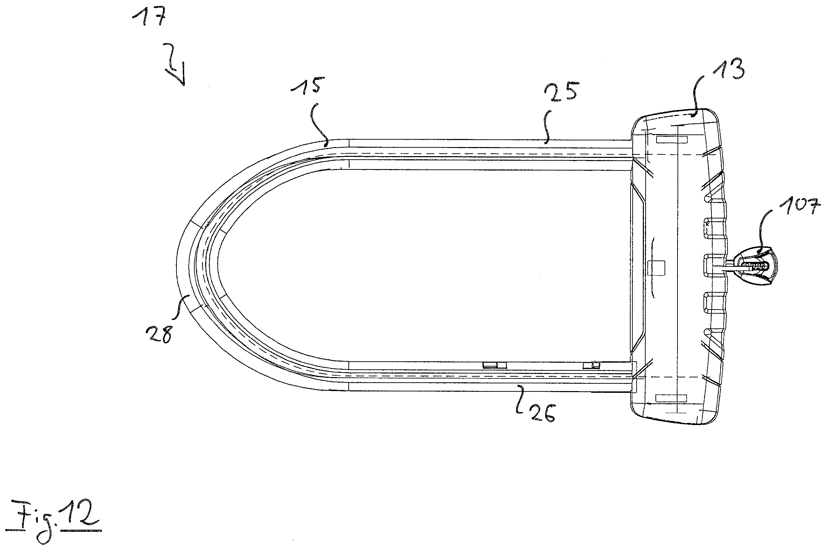

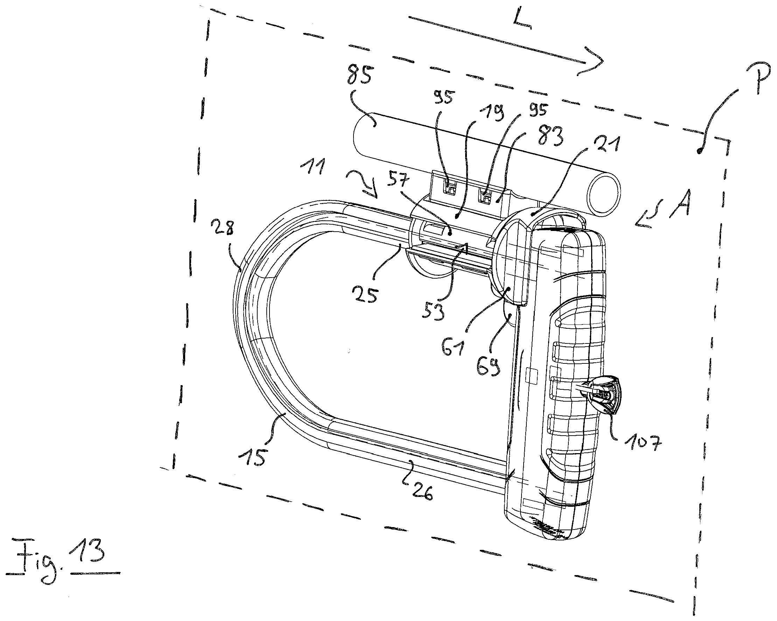

Fig. 1A und 1B zeigen eine sich entlang einer Längsachse L erstreckende Halterung 11 zum Befestigen eines zugeordneten Bügelschlosses 17 an einem Zweirad, um das Bügelschloss 17 während einer Fahrt komfortabel transportieren und an verschiedenen Orten zum Sichern des Zweirads verwenden zu können. Um ein Zweirad gegen ein unbefugtes Wegfahren sichern zu können, umfasst das zugeordnete Bügelschloss 17 einen Schlosskörper 13 und einen U-förmigen Bügel 15, welcher zwei Schenkel 25 und 26 aufweist, die über einen Verbindungsabschnitt 28 miteinander verbunden sind (vgl. Fig. 12 und 13). Der Bügel 15 kann wahlweise mittels eines Schlüssels 107 an dem Schlosskörper 13 verriegelt oder für ein Lösen von dem Schlosskörper 13 freigegeben werden, um das Zweirad beispielsweise über das zugeordnete Bügelschloss 17 mit einem ortsfesten Gegenstand wie einem Laternenpfahl oder einem Fahrradständer verbinden und daran sichern zu können.

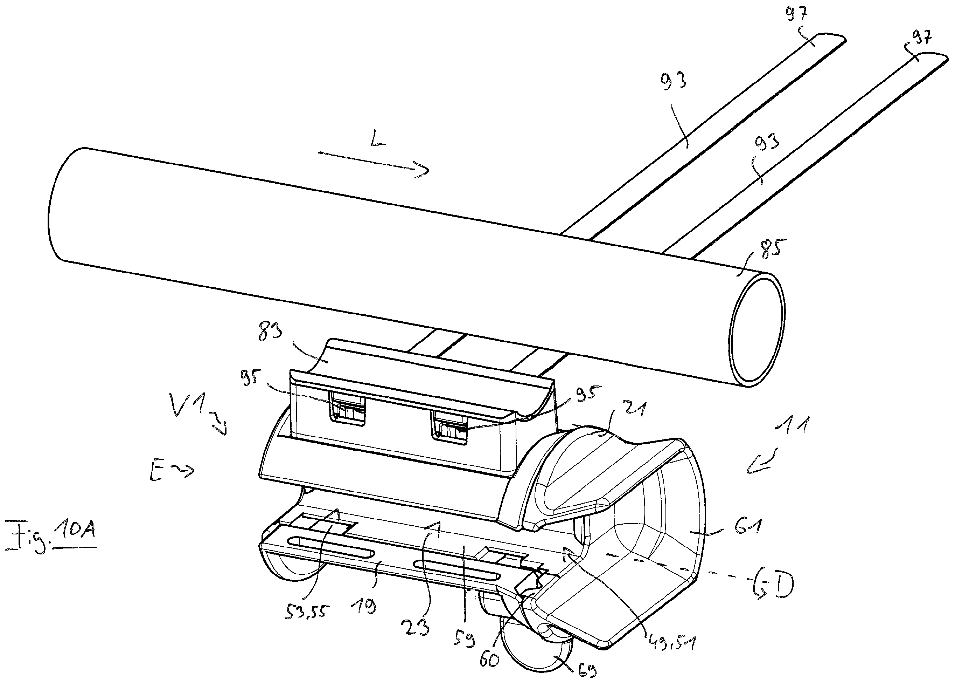

Wie die Fig. 10A bis 10C zeigen, kann die Halterung 11 mittels zweier Befestigungsbänder 93 an einem Abschnitt eines Rahmens 85 des Zweirads befestigt werden, so dass das in der Halterung 11 aufgenommene zugeordnete Bügelschloss 17 ebenfalls mit dem Rahmen 85 des Zweirads verbunden werden kann (vgl. Fig. 13). Die Halterung 11 und das in der Halterung 11 aufgenommene zugeordnete Bügelschloss 17 können insbesondere in einer Ebene P an dem Rahmen 85 angeordnet werden, welche durch den Rahmen 85 des Zweirads definiert ist, so dass das aufgenommene Bügelschloss 17 einen Nutzer der Halterung 11 während einer Fahrt nicht durch ein unangemessen weites seitliches Herausragen über den Rahmen 85 hinaus beeinträchtigt.

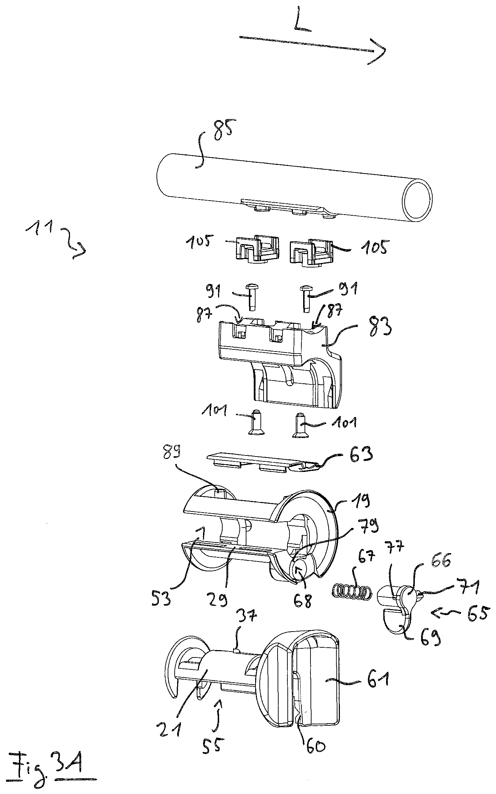

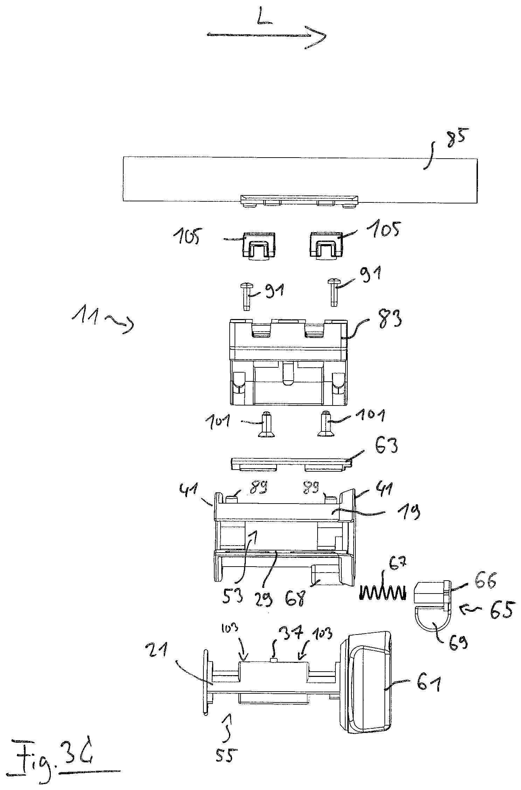

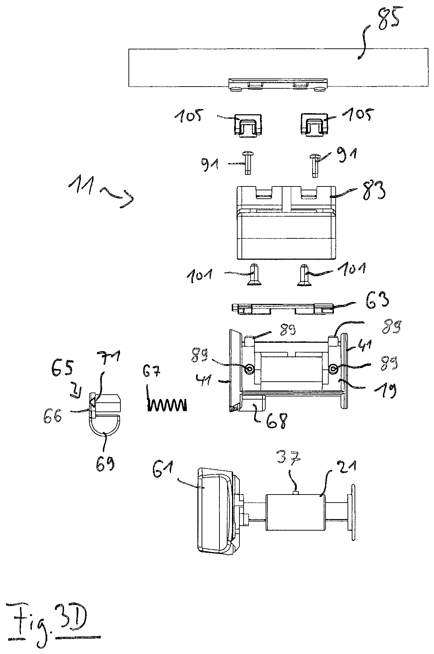

Die Halterung 11 umfasst ein Gehäuse 19 sowie ein Einsatzteil 21, welches teilweise innerhalb des Gehäuses 19 angeordnet ist, jedoch an einander axial bezüglich der Längsachse L der Halterung 11 entgegengesetzten Endabschnitten 41 des Gehäuses 19 aus dem Gehäuse 19 heraustritt und die Endabschnitte 41 übergreift. Durch dieses Übergreifen sind das Einsatzteil 21 und das Gehäuse 19 axial bezüglich der Längsachse L relativ zueinander festgelegt und unbeweglich (vgl. auch Fig. 3A bis 3D).

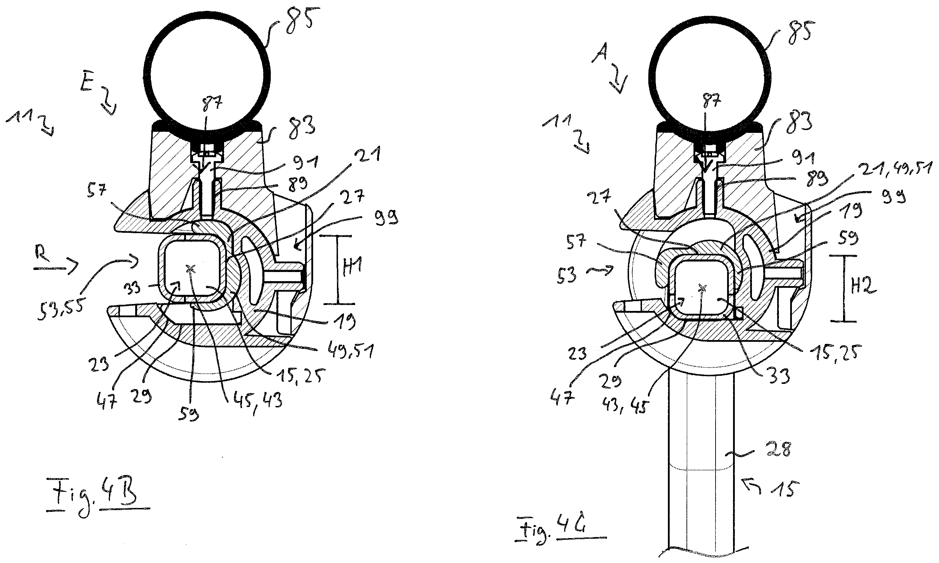

Während das Einsatzteil 21 somit axial bezüglich der Längsachse L der Halterung 11 in dem Gehäuse 19 festgelegt und hülsenartig von dem Gehäuse 19 umgriffen ist, ist das Einsatzteil 21 um eine parallel zu der Längsachse L der Halterung 11 ausgerichtete Drehachse D relativ zu dem Gehäuse 19 zwischen einer Einsetzdrehstellung E und einer Arretierdrehstellung A drehbar. Dabei ist der Schenkel 25 (oder auch der Schenkel 26) des Bügels 15 des zugeordneten Bügelschlosses 17 in der Einsetzdrehstellung E in einen Aufnahmeraum 23 der Halterung 11 einsetzbar und durch Drehen des Einsatzteils 11 in die Arretierdrehstellung A in dem Aufnahmeraum 23 verspannbar. Dies wird nachstehend näher erläutert (vgl. dazu insbesondere Fig. 4C und 5C sowie Fig. 13).

Das Gehäuse 19 und das Einsatzteil 21 weisen einen jeweiligen Längsschlitz 53 bzw. 55 auf, wobei sich die Längsschlitze 53 und 55 entlang der Längsachse L der Halterung 11 erstrecken und in der Einsetzdrehstellung E in Flucht zueinander ausgerichtet sind (vgl. Fig. 1A, 3A, 3B und 10A). In der Einsetzdrehstellung E kann der Schenkel 25 des Bügels 15 des zugeordneten Bügelschlosses 17 daher entlang einer Einsetzrichtung R, welche senkrecht zu der Längsachse L und der Drehachse D des Einsatzteils 21 ausgerichtet ist, in den Aufnahmeraum 23 der Halterung 11 eingesetzt werden. Das Einsetzen des Schenkels 25 kann somit durch eine Bewegung in einer Ebene erfolgen, welche senkrecht zu der Längsachse L der Halterung 11 ausgerichtet ist.

Ferner weist das Einsatzteil 21 eine Schlosskörperaufnahme 61 auf, in welche der Schlosskörper 13 des zugeordneten Bügelschlosses 17 einsetzbar ist (vgl. Fig. 1A, 4A, 5A ,10A und 13). Dabei erstreckt sich der Längsschlitz 55 des Einsatzteils 21 bis in die Schlosskörperaufnahme 61 hinein, so dass das zugeordnete Bügelschloss 17 in einem Geschlossenzustand, in welchem der Bügel 15 mit dem Schlosskörper 13 verbunden ist, in die Halterung 11 eingesetzt werden kann, wenn sich das Einsatzteil 21 in der Einsetzdrehstellung E befindet. In dieser Einsetzdrehstellung E kann folglich der Schenkel 25 in den Aufnahmeraum 23 und der mit dem Bügel 15 verbundene Schlosskörper 13 in die Schlosskörperaufnahme 61 eingesetzt werden, so dass das gesamte Bügelschloss 17 in einem einzigen Schritt in die Halterung 11 eingesetzt werden kann.

Wie insbesondere aus Fig. 4B hervorgeht, bildet das Einsatzteil 21 bei dem gezeigten Ausführungsbeispiel eine U-förmige Aufnahme 49 für den in den Aufnahmeraum 23 eingesetzten Schenkel 25. Das Einsatzteil 21 umgreift dabei den Schenkel 25 und begrenzt den Aufnahmeraum 23 somit dreiseitig. Der in Fig. 4B formschlüssig in den Aufnahmeraum 23 eingesetzte Schenkel 25 liegt dabei in der Einsetzdrehstellung E an einer von dem Einsatzteil 21 gebildeten Anlagefläche 27 sowie zwei senkrecht von der Anlagefläche 27 wegragenden Abschnitten 57 und 59 des Einsatzteils 21 an. Die Anlagefläche 27 bildet somit gewissermaßen einen Bodenabschnitt der im Querschnitt bzw. in einer Projektion auf eine zu der Längsachse L der Halterung 11 senkrechte Ebene U-förmigen Aufnahme 49.

Während der Schenkel 25 in der Einsetzdrehstellung E durch die zueinander fluchtenden Längsschlitze 53 und 55 entlang der Einsetzrichtung R in den Aufnahmeraum 23 eingesetzt werden kann, wird der Schenkel 25 durch Drehen des Einsatzteils 21 in die Arretierdrehstellung A in dem Aufnahmeraum 23 verspannt, wie insbesondere aus Fig. 4C hervorgeht. Das Einsatzteil 21 ist bei der in den Figuren gezeigten Ausführungsform durch eine Drehung um 90° aus der Einsetzdrehstellung E in die Arretierdrehstellung A versetzbar, so dass die Anlagefläche 27 infolge einer Drehung des Einsatzteils 21 in die Arretierdrehstellung A ebenfalls um 90° versetzt wird. Die Anlagefläche 27 wird durch diese Drehung in die Arretierdrehstellung A in eine Stellung überführt, in welcher die Anlagefläche 27 einer Innenseite 29 des Gehäuses 19 entgegengesetzt angeordnet ist. Dies ermöglicht es, den Schenkel 25 zwischen der Anlagefläche 27 und der Innenseite 29 des Gehäuses 19 zu verspannen.

Insbesondere kann die Spannwirkung dabei dadurch erzeugt werden, dass der Aufnahmeraum 23 in der Einsetzdrehstellung E eine erste lichte Höhe H1 und in der Arretierdrehstellung A eine zweite lichte Höhe H2 aufweist, wobei die zweite lichte Höhe H2 dem Abstand zwischen der Anlagefläche 27 und der Innenseite 29 des Gehäuses 19 entspricht und wobei die zweite lichte Höhe H2 geringer ist als die erste lichte Höhe H1 (vgl. Fig. 4B und 4C). Der den Aufnahmeraum 23 bereits in der Einsetzdrehstellung E vollständig ausfüllende Schenkel 25 wird somit in der Arretierdrehstellung A durch die Anlagefläche 27 in Richtung der Innenseite 29 des Gehäuses 19 gedrückt und dadurch in dem Aufnahmeraum 23 zwischen der Innenseite 29 und der Anlagefläche 27 verspannt.

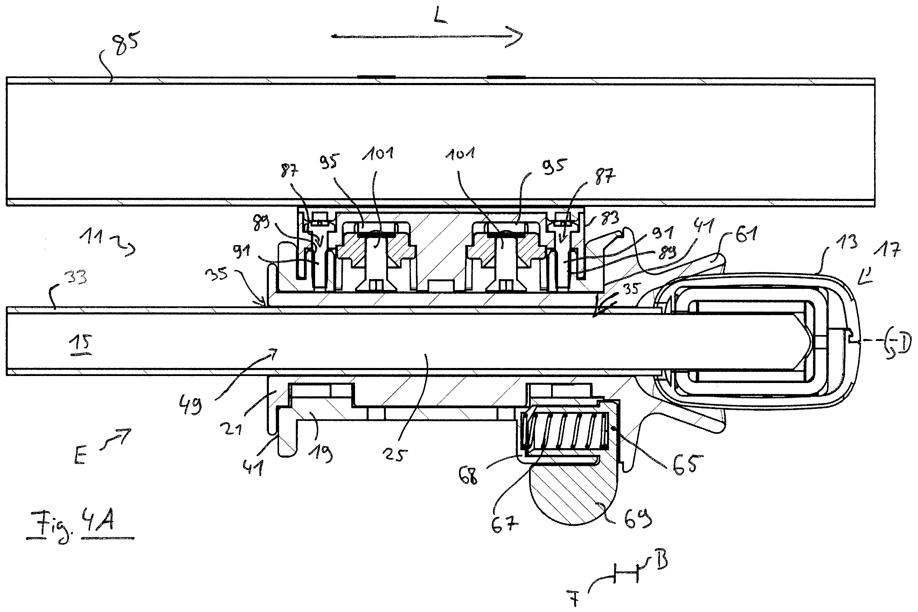

Darüber hinaus weist die Anlagefläche 27 an einander axial bezüglich der Längsachse L der Halterung 11 entgegensetzten Endabschnitten 35 des Aufnahmeraums 23 einen jeweiligen Eingriffsabschnitt 31 auf, welcher in der Arretierdrehstellung A in Richtung der Innenseite 29 des Gehäuses 19 wegragt (vgl. Fig. 1A, 2A, 2B und 7). Durch diese Eingriffsabschnitte 31 kann der Schenkel 25 in dem Aufnahmeraum 23 axial bezüglich der Längsachse L der Halterung 11 in dem Aufnahmeraum 23 fixiert gehalten werden, wenn sich das Einsatzteil 21 in der Arretierdrehstellung A befindet. Zudem kann durch die Eingriffsabschnitte 31 eine Kraft in Richtung der Innenseite 29 auf den Schenkel 25 übertragen werden, so dass die Eingriffsabschnitte 31 auch zu der Verspannung des Schenkels 25 in dem Aufnahmeraum 23 beitragen können. Insbesondere können die Eingriffsabschnitte 31 in einen elastisch verformbaren Mantel 33 des in den Aufnahmeraum 23 eingesetzten Schenkels 25 eingreifen, um den Schenkel 25 dadurch axial in der Halterung 11 zu fixieren (vgl. Fig. 4A bis 5C).

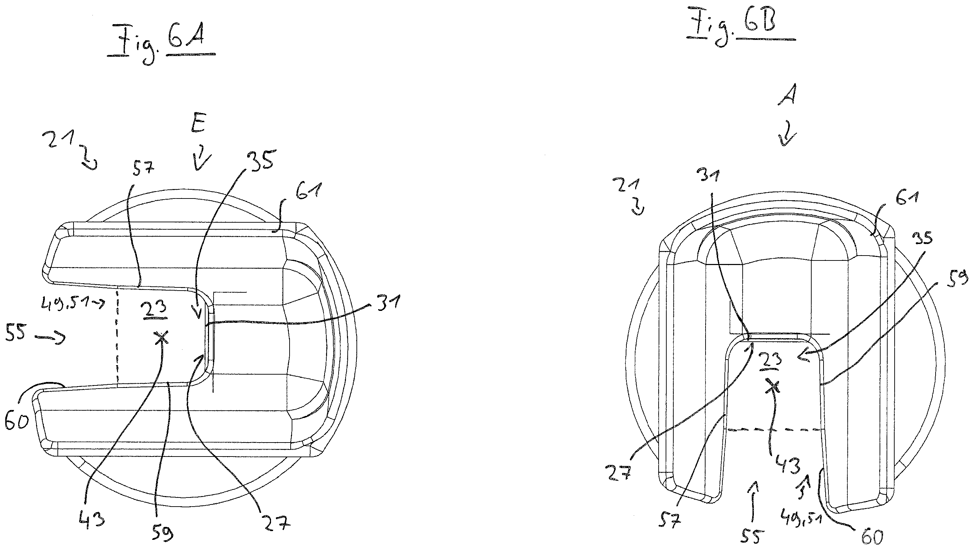

Wie sich aus den Fig. 4B und 4C ferner ergibt, ist der Aufnahmeraum 23 durch das Drehen des Einsatzteils 21 aus der Einsetzdrehstellung E in die Arretierdrehstellung A in einer Projektion auf eine senkrecht zu der Längsachse L der Halterung 11 ausgerichteten Ebene bewegbar (vgl. auch Fig. 6A und 6B). Ein Mittelpunkt 43 des Aufnahmeraums 23, welcher in dem gezeigten Ausführungsbeispiel mit einem Mittelpunkt 45 einer Querschnittsfläche des Schenkels 25 des Bügels 15 des zugeordneten Bügelschlosses 17 zusammenfällt, ist dabei exzentrisch zu der Drehachse D des Einsatzteils 11 angeordnet und daher auf einer Kreisbahn um die Drehachse D bewegbar, wenn das Einsatzteil 11 aus der Einsetzdrehstellung in die Arretierdrehstellung A überführt wird (vgl. auch Fig. 6A und 6B). Entsprechend ist auch der eingesetzte Schenkel 25 während der Drehung des Einsatzteils 21 mitführbar, wobei sich der Mittelpunkt 45 der Querschnittsfläche des Schenkels 25 ebenfalls auf einer Kreisbahn um die Drehachse D des Einsatzteils 21 bewegt. Durch dieses Mitführen kann der in der Einsetzdrehstellung E in den Aufnahmeraum 23 eingesetzte Schenkel 25 in Anlage zu der Innenseite 29 des Gehäuses 19 gebracht werden, um zwischen der Anlagefläche 27 und der Innenseite 29 und somit zwischen dem Einsatzteil 21 und dem Gehäuse 19 in der Arretierdrehstellung A verspannt zu werden.

Für den Schenkel 25 des Bügels 15 des zugeordneten Schlosses 17, welcher formschlüssig in die von dem Einsatzteil 21 gebildete U-förmige Aufnahme 49 einsetzbar ist, fungiert das Einsatzteil 21 während der Drehung als ein Mitnehmer 51, so dass sich eine Drehung des Einsatzteils 21 unmittelbar auf den Schenkel 25 überträgt. Zudem ermöglicht es die Schlosskörperaufnahme 61, den Schlosskörper 13 des in der Halterung 11 aufgenommenen zugeordneten Bügelschlosses 17 gewissermaßen als einen Hebel zu nutzen, um das Einsatzteil 21 von der Einsetzdrehstellung E in die Arretierdrehstellung A zu überführen und die erforderlichen Spannkräfte erzeugen zu können (vgl. Fig. 4A und 13). Durch den Schlosskörper 13 können somit verhältnismäßig große Drehmomente auf das Einsatzteil 11 übertragen werden, um eine hohe Spannkraft aufbringen und ein sicheres Verspannen des Schenkels 25 in dem Aufnahmeraum 23 erreichen zu können.

Ferner ermöglicht es das Mitführen des Schenkels 25 während der Drehung des Einsatzteils 21, auch die Ausrichtung des Bügels 15 um den Winkel zwischen der Einsetzdrehstellung E und der Arretierdrehstellung A, hier um 90°, zu verändern. Dadurch kann der Schenkel 25 entlang der Einsetzrichtung R derart in den Aufnahmeraum 23 eingesetzt werden, dass der Bügel 15 bei in den Aufnahmeraum 23 eingesetztem Schenkel 25 in der Einsetzdrehstellung E in einer senkrecht zu der durch den Rahmen 85 des Zweirads definierten Ebene P angeordnet ist (vgl. Fig. 1A, 2A, 4A, 5A, 10B, 10C und 13). Durch Drehen des Einsatzteils 21 aus der Einsetzdrehstellung E in die Arretierdrehstellung A kann der Bügel 15 somit innerhalb der durch den Rahmen 85 definierten Ebene P oder einer dazu parallelen Ebene angeordnet werden, so dass ein Nutzer während einer Fahrt nicht durch das an dem Zweirad befestigte Bügelschloss 17 beeinträchtigt wird. Wie auch aus Fig. 4C hervorgeht, ist der Verbindungsabschnitt 28 des Bügels 15 in der Arretierdrehstellung A des Einsatzteils 21 dementsprechend in der genannten Ebene P angeordnet, wenn der Schenkel 25 in den Aufnahmeraum 23 eingesetzt ist. In Fig. 4B ist der Verbindungsabschnitt 28 ausgeblendet, jedoch erstreckt sich der Verbindungsabschnitt 28 des Bügels 15 in Einsetzdrehstellung E des Einsatzteils 21 entlang der Einsetzrichtung R und somit um 90° versetzt zu der Orientierung des Verbindungsabschnitts 28 in der Arretierdrehstellung A des Einsatzteils 21, wenn der Schenkel 25 in den Aufnahmeraum 23 eingesetzt ist.

Die Innenseite 29 des Gehäuses 19 weist zudem eine Einführschräge 47 auf, über welche der Schenkel 25 während eines Drehens des Einsatzteils 21 aus der Einsetzdrehstellung E in die Arretierdrehstellung A geführt wird und an welcher der Schenkel 25 in der Arretierdrehstellung A anliegt (vgl. Fig. 4C). Die Einführschräge 47 ermöglicht ein kontrolliertes und leichtgängiges Führen des Schenkels 25, wenn der Schenkel 25 während der Drehung des Einsatzteils 21 in die Arretierdrehstellung A in Anlage zu der Innenseite 29 des Gehäuses 19 gebracht wird. Zudem kann durch das Anliegen des Schenkels 25 an der Einführschräge 47 in der Arretierdrehstellung A ein Teil der auf den Schenkel 25 von der Anlagefläche 27 in Richtung der Innenseite 29 des Gehäuses 19 wirkenden Kraft in eine Komponente umgeleitet werden, welche von dem Längsschlitz 53 des Gehäuses 19 weggerichtet ist. Die Einführschräge 47 ermöglicht es somit, den Schenkel 25 in der Arretierdrehstellung A in zwei Richtungen in dem Aufnahmeraum 23 zu verspannen, wobei diese Richtungen senkrecht zu der Längsachse L der Halterung und insbesondere senkrecht zueinander ausgerichtet sein können.

Der den Schenkel 25 umgreifende Abschnitt 57 des Einsatzteils 21 schließt zudem in der Arretierdrehstellung A den Längsschlitz 53 des Gehäuses 19, so dass der Schenkel 25 gegen ein ungewollte Lösen aus der Halterung 11 zusätzlich gesichert ist. In der Arretierdrehstellung A ist der Aufnahmeraum 23 somit im Querschnitt bzw. einer zu der Längsachse L der Halterung 11 senkrechten Ebene vierseitig begrenzt, während die zueinander fluchtenden Längsschlitze 53 und 55 in der Einsetzdrehstellung E eine Öffnung des Aufnahmeraums 23 bilden, durch welche der Schenkel 25 in den Aufnahmeraum einsetzbar ist.

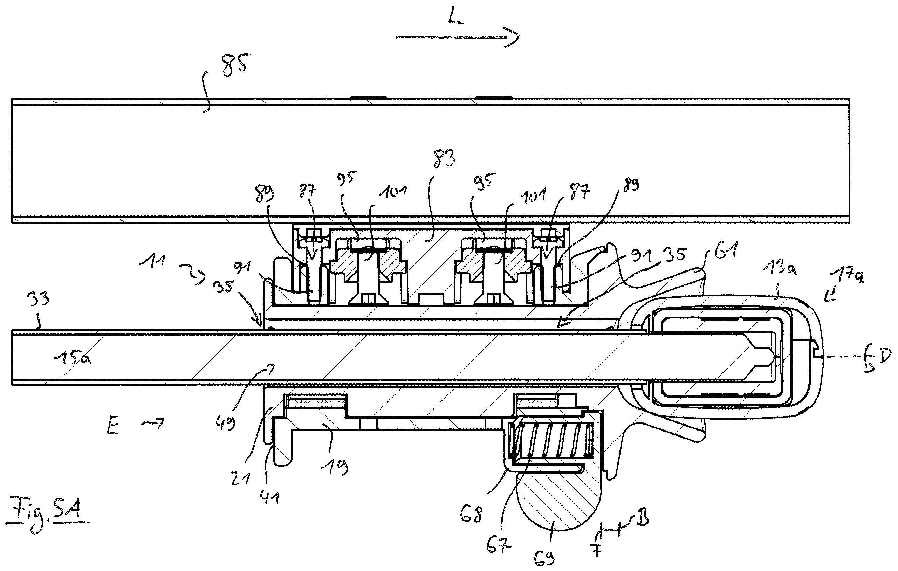

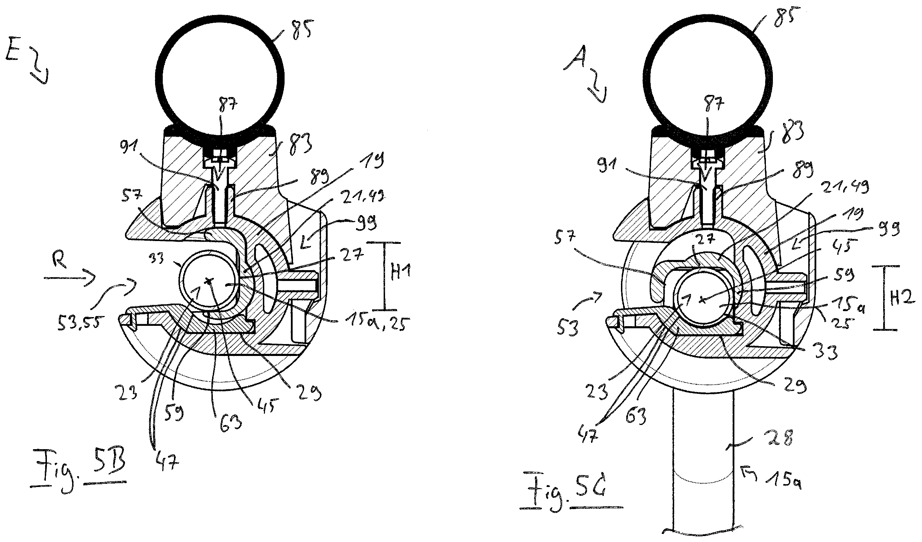

Um die Halterung 11 flexibel zum Befestigen verschieden ausgebildeter Bügelschlösser 17 nutzen zu können, ist ferner ein Adapter 63 vorgesehen, welcher wahlweise in das Gehäuse 19 einsetzbar und beispielsweise in den Explosionsdarstellungen der Fig. 3A bis 3D gezeigt ist. Insbesondere ist der Adapter 63 dabei an der bereits genannten Innenseite 29 des Gehäuses 19, welche der Anlagefläche 27 des Einsatzteils 21 in der Arretierdrehstellung A entgegengesetzt angeordnet ist, einclipsbar. Dieser Adapter 63 ermöglicht es einem Nutzer, wahlweise verschiedene und insbesondere ein weiteres Bügelschloss 17a in die Halterung 11 einzusetzen, wobei auch ein Schenkel 25 des weiteren Bügelschlosses 17a zuverlässig in der Halterung 11 verspannt werden kann (vgl. Fig. 5A bis 5C). Wiederum ist ein Verbindungsabschnitt 28 des weiteren Bügels 15a in Fig. 5C dargestellt, in Fig. 5B hingegen ausgeblendet.

Das weitere Bügelschloss 17a weist hier einen im Querschnitt kreisförmigen Bügel 15a auf, wobei der Querschnittsdurchmesser dieses Bügels 15a geringer ist als die erste lichte Höhe H1 des Aufnahmeraums 23 (vgl. Fig. 5B). Der Schenkel 25 dieses Bügels 15 liegt daher nach einem Einsetzen in den Aufnahmeraum 23 in der Einsetzdrehstellung E des Einsatzteils 21 lediglich an der Anlagefläche 27 und dem Abschnitt 59 des Einsatzteils 21 an, während der Abschnitt 57 des Einsatzteils 21 beabstandet zu dem Schenkel 25 angeordnet ist. Durch Einsetzen bzw. Einclipsen des Adapters 63 kann jedoch erreicht werden, dass der Schenkel 25 des Bügels 15a in der Arretierdrehstellung A an der Anlagefläche 27 und dem Adapter 63 anliegt, so dass der Schenkel 25 des Bügels 15a ebenfalls, wie der Schenkel 25 des Bügels 15 des zugeordneten Schlosses 17, in der Arretierdrehstellung A des Einsatzteils 21 in dem Aufnahmeraum 23 verspannt werden kann. Durch Einsetzen des Adapters 63 kann insbesondere die zweite lichte Höhe H2 des Aufnahmeraums 23 bzw. die lichte Höhe des Aufnahmeraums 23 in der Arretierdrehstellung A derart verkleinert werden, dass auch der Schenkel 25 des Bügels 15a des weiteren Bügelschlosses 17a in der Halterung 11 verspannt werden kann. Die Verspannung des Schenkels 25 des Bügels 15a erfolgt somit insbesondere zwischen dem Adapter 63 und der Anlagefläche 27. Ferner weist auch der Adapter 63 eine Einführschräge 47 auf, so dass der Schenkel 25 des Bügels 15a ebenfalls in zwei Richtungen in dem Aufnahmeraum 23 verspannt ist, wenn das Einsatzteil 21 sich in der Arretierdrehstellung A befindet. Mittels des Adapters 63 kann ein Nutzer die Halterung 11 somit flexibel anpassen, um wahlweise verschieden ausgebildete Bügelschlösser 17 oder 17a in der Halterung 11 aufnehmen und zuverlässig verspannen zu können. Insbesondere kann die Halterung 11 zusätzliche, nicht gezeigte weitere Adapter aufweisen, um die Halterung 11 wahlweise an eine Vielzahl von, insbesondere gängigen, Bügelformen anpassen zu können.

Wie ferner beispielsweise aus den in den Fig. 4A und 5A gezeigten Längsschnitten hervorgeht, ist die Schlosskörperaufnahme 61 des Einsatzteils 21 entlang der Längsachse L zulaufend ausgebildet. In dem gezeigten Ausführungsbeispiel ist die Schlosskörperaufnahme 61 insbesondere konisch zulaufend ausgebildet. Dies ermöglicht es, zusätzlich zu dem Verspannen verschieden ausgebildeter Schenkel 25 in dem Aufnahmeraum 23 auch verschieden ausgebildete Schlosskörper, insbesondere den Schlosskörper 13 des zugeordneten Bügelschlosses 17 und einen sich davon in der Form unterscheidenden Schlosskörper 13a des weiteren Bügelschlosses 17a, in der Schlosskörperaufnahme 61 gleichermaßen zuverlässig aufzunehmen. Aufgrund der zulaufenden Ausbildung der Schlosskörperaufnahme 61 können grundsätzlich Schlosskörper 13 verschiedenster Geometrien oder Formen in der Schlosskörperaufnahme 61 aufgenommen werden, wobei eine Eindringtiefe der jeweiligen Schlosskörper 13 von der jeweiligen Geometrie oder Form abhängen kann. In der Halterung 11 können somit verschieden ausgebildete Bügelschlösser 17 oder 17a gleichermaßen zuverlässig aufgenommen werden, so dass ein Nutzer die Halterung 11 flexibel zum Befestigen verschiedener Bügelschlösser 17 und 17a an einem Zweirad nutzen kann.

Zudem kann auch der Schlosskörper 13a des weiteren Bügelschlosses 17a aufgrund dessen Aufnahme in der Schlosskörperaufnahme 61 als Hebel genutzt werden, um eine Drehung auf das Einsatzteil 21 übertragen zu können und die erforderlichen Spannkräfte aufzubringen. Darüber hinaus kann durch die Drehung des Schlosskörpers 13a auch der Schenkel 25 des Bügels 15a während einer Drehung des Einsatzteils 21 mitgeführt wird, auch wenn das Einsatzteil 21 aufgrund der fehlenden Anlage des Schenkels 25 des Bügels 15a an dem Abschnitt 57 des Einsatzteils 21 für diesen Schenkel 25 nicht als Mitnehmer fungieren kann.

Fig. 6A und 6B veranschaulichen nochmals die Bewegung des Aufnahmeraums 23 in einer Projektion auf eine zu der Längsachse L der Halterung 11 senkrechte Ebene infolge eines Drehens des Einsatzteils 21 aus der Einsetzdrehstellung E in die Arretierdrehstellung A, wobei eine Begrenzung der Querschnittsfläche des Aufnahmeraums 23 durch eine gestrichelte Linie angedeutet ist. Wie bereits erläutert, wird der Mittelpunkt 43 der Querschnittsfläche des Aufnahmeraums 23 dabei in einem Kreisbogen um 90° um die Drehachse D geführt, zu welcher der Mittelpunkt 43 der Querschnittsfläche des Aufnahmeraums 23 exzentrisch angeordnet ist.

Während der Aufnahmeraum 23 in der Arretierdrehstellung A vierseitig und dadurch klar begrenzt ist, ist der Aufnahmeraum 23 in der Einsetzdrehstellung E durch die zueinander fluchtenden Längsschlitze 53 und 55 bei der gezeigten Ausführungsform in einer Richtung offen. Jedoch ist der Aufnahmeraum 23 auch in der Einsetzdrehstellung E als in Richtung des Längsschlitzes 53 des Gehäuses 19 dadurch begrenzt zu erachten, dass das Einsatzteil 21 in den Aufnahmeraum 23 bei eingesetztem Schenkel 25 um die Drehachse D drehbar ist. Der Aufnahmeraum 23 ist somit in der Einsetzdrehstellung E in Richtung des Längsschlitzes 53 durch den Abstand zwischen der Anlagefläche 27 und dem Ende der Einführschräge 47 in Richtung des Längsschlitzes 53 begrenzt, da ein sich über diesen Abstand hinaus erstreckender Schenkel eine Drehung des Einsatzteils 21 in die Arretierdrehstellung A blockieren würde (vgl. auch Fig. 4B, 4C, 5B und 5C).

Darüber hinaus umfasst die Halterung 11 ein Blockierelement 65, welches eine Drehung des Einsatzteils 21 aus der Arretierdrehstellung A in die Einsetzdrehstellung E blockiert (vgl. Fig. 3A bis 3D, 4A, 5A und 7). Durch dieses Blockierelement 65 kann ein ungewolltes Drehen des Einsatzteils 21 aus der Arretierdrehstellung A in die Einsetzdrehstellung E verhindert werden, um sicherzustellen, dass sich das in die Halterung 11 eingesetzte Bügelschloss 17 oder 17a nicht plötzlich und beispielsweise während einer Fahrt mit dem Zweirad aufgrund einer solchen Drehung aus der Halterung 11 löst.

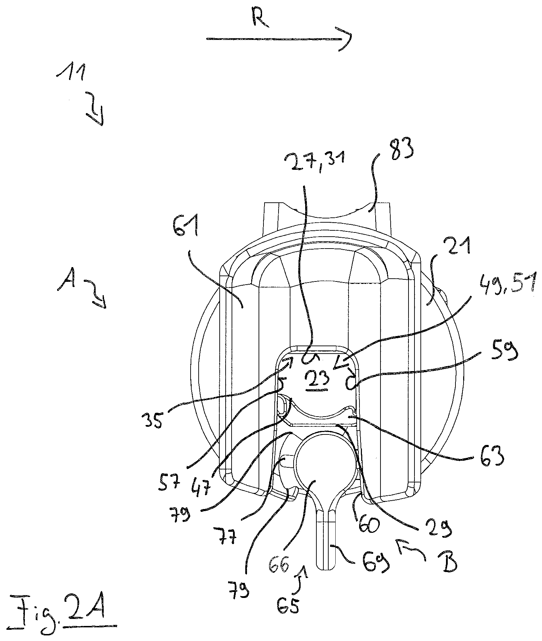

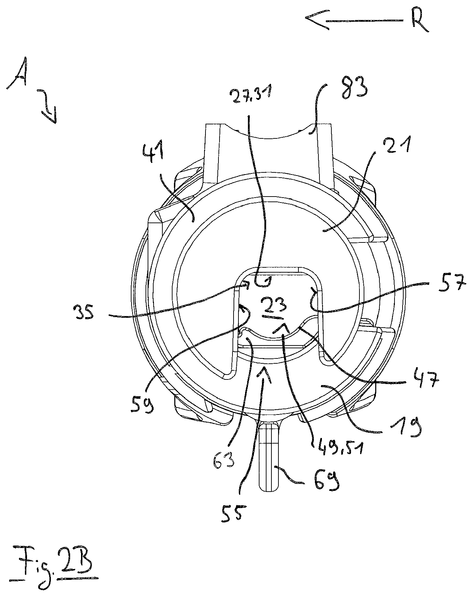

Das Blockierelement 65 ist dazu mittels einer Feder 67, welche in einer Federaufnahme 68 des Gehäuses 19 aufgenommen und an dem Gehäuse 19 abgestützt ist, axial bezüglich der Längsachse L der Halterung 11 in Richtung einer Blockierstellung B vorgespannt (vgl. Fig. 2A, 4A, 5A und 7). In dieser Blockierstellung B greift das Blockierelement 65 mit einem Kopfabschnitt 66 axial in eine Bewegungsbahn ein, welche das Einsatzteil 21 während einer Drehung aus der Arretierdrehstelllung A in die Einsetzdrehstellung E beschreibt, so dass das Einsatzteil 21 gegen diese Drehung blockiert ist (vgl. Fig. 2A). Bei Beginn einer ungewollten Drehung in Richtung der Einsetzdrehstellung E stößt somit eine seitliche Begrenzung 60 der Schlosskörperaufnahme 61 und/oder des Aufnahmeraums 23 an dem Kopfabschnitt 66 des sich in der Blockierstellung B befindenden Blockierelements 65 an, so dass eine solche Drehung unterbunden wird. Die seitliche Begrenzung 60 kann insbesondere an dem Kopfabschnitt 66 anliegen, wenn sich das Einsatzteil 21 in der Arretierdrehstellung A und das Blockierelement 65 in der Blockerstellung B befindet.

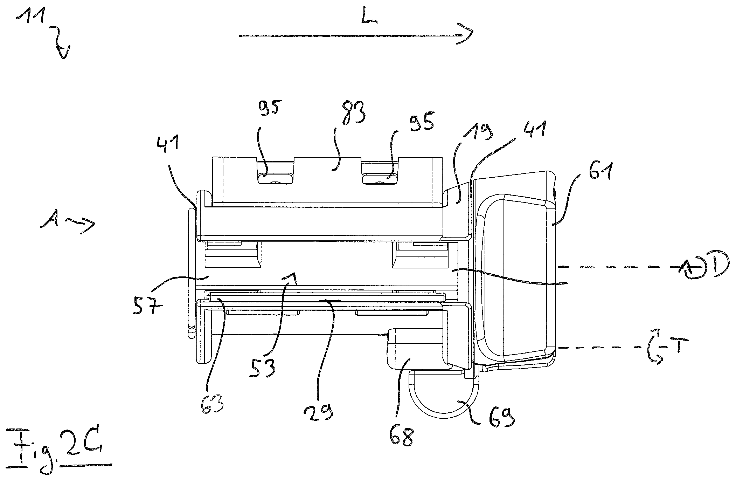

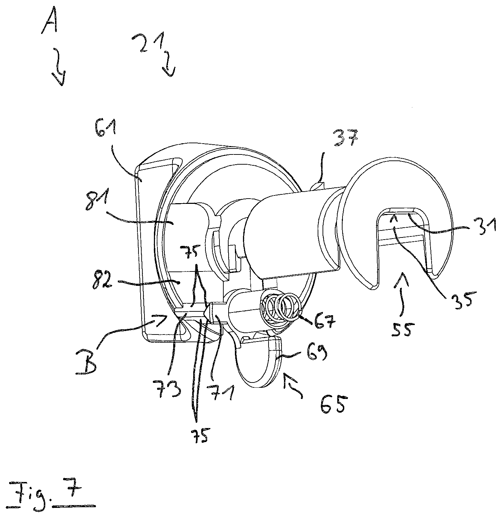

Wie Fig. 7 zeigt, greift das Blockierelement 65 in der Blockierstellung B ferner mit einem Verdrängungsabschnitt 71 in eine an dem Einsatzteil 21 ausgebildete Verdrängungsvertiefung 73 ein. Der Verdrängungsabschnitt 71 und die Verdrängungsvertiefung 73 weisen zwei jeweilige Antriebsschrägen 75 auf, welche derart zusammenwirken, dass das Blockierelement 65 durch Betätigen eines Betätigungsabschnitts 69 aus der Blockierstellung B in eine gegenüber der Blockierstellung B axial bezüglich der Längsachse L versetzte Freigabestellung F überführt werden kann, in welcher das Einsatzteil 21 für eine Drehung aus der Arretierdrehstellung A in die Einsetzdrehstellung E freigegeben ist. Hierzu kann ein Nutzer den hebelartig von dem Blockierelement 65 wegragenden Betätigungsabschnitt 69 um eine zu der Drehachse D des Einsatzteils 21 parallel ausgerichtete Befestigungsachse T verschwenken und das Blockierelement 65 drehen (vgl. Fig. 2C). Aufgrund des Zusammenwirkens der Antriebsschrägen 75 kann aus dieser Drehbewegung des Verdrängungsabschnitts 71 eine axiale Bewegung des Blockierelements 65 entlang der Längsachse L und entgegen der von der Feder 67 entfalteten Vorspannung abgeleitet werden, so dass das Blockierelement 65 in die Freigabestellung F überführt werden kann (vgl. die Fig. 2C, 4A, 5A und 7).

Indem sowohl der Verdrängungsabschnitt 71 als auch die Verdrängungsvertiefung 73 zwei jeweilige Antriebsschrägen 75 aufweisen, kann das Blockierelement 65 unabhängig von der Richtung, in welcher ein Nutzer den Betätigungsabschnitt 69 betätigt, aus der Blockierstellung B in die Freigabestellung F gedrängt werden. Somit kann ein Nutzer das Blockierelement 65 situationsabhängig und ohne auf eine korrekte Betätigungsrichtung achten zu müssen aus der Blockierstellung B in die Freigabestellung F überführen, um das Einsatzteil 21 aus der Arretierdrehstellung A in die Einsetzdrehstellung E drehen und das in der Halterung 11 aufgenommene Bügelschloss 17 oder 17a entnehmen zu können.

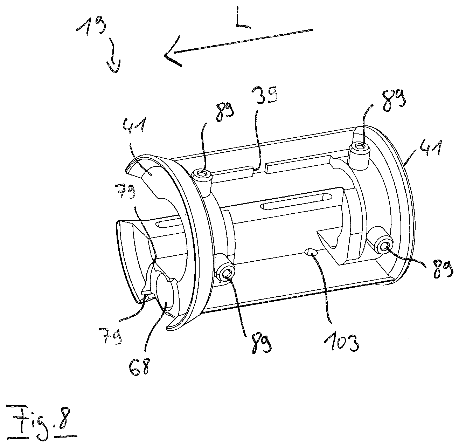

Das Blockierelement 65 weist ferner einen dem Verdrängungsabschnitt 71 entgegengesetzt angeordneten Anschlagabschnitt 77 auf, welcher bei einem Erreichen der Freigabestellung F an einer Begrenzung 79 des Gehäuses 19 anschlägt (vgl. Fig. 2A und 8). Insbesondere weist das Gehäuse 19 zwei solcher Begrenzungen 79 auf, so dass unabhängig von der Richtung, in welcher der Betätigungsabschnitt 69 von einem Nutzer betätigt wird, eine Bewegung des Blockierelements 65 über die Freigabestellung F hinaus blockiert und ein Überdrehen des Blockierelements 65 verhindert werden kann.

Während einer Drehung des Einsatzteils 21 von der Arretierdrehstellung A in die Einsetzdrehstellung E bzw. in Drehstellungen zwischen der Arretierdrehstellung A und der Einsetzdrehstellung E ist das Einsatzteil 21 axial bezüglich der Längsachse L der Halterung 11 in Flucht zu dem Blockierelement 65 angeordnet, so dass das Einsatzteil 21 eine Rückkehr des Blockierelements 65 in die Blockierstellung B verhindert. Ein Nutzer kann das Blockierelement 65 somit unmittelbar nach Beginnen des Drehens des Einsatzteils 21 freigeben, ohne dauerhaft dessen Betätigungsabschnitt 69 betätigen zu müssen.

Das Einsatzteil 21 weist ferner eine in Fig. 7 sichtbare Rastvertiefung 81 auf, in welche das Blockierelement 65 in der Einsetzdrehstellung E eingreift. Während der Drehung des Einsatzteils 21 aus der Einsetzdrehstellung E in die Arretierdrehstellung A muss ein Nutzer folglich das Blockierelement 65 entgegen der von der Feder 67 entfalteten Vorspannung aus der Rastvertiefung 81 herausdrängen und entsprechend eine Kraft entfalten. Auch in der Einsetzdrehstellung E ist das Einsatzteil 21 dadurch gegen eine ungewünschte Drehung gesichert. Insbesondere schließt sich die Rastvertiefung 81 an eine bezüglich der Längsachse L schräge Fläche 82 an, über welche das Blockierelement 65 während einer Drehung des Einsatzteils 21 geführt ist, um in die Rastvertiefung 81 hinein oder aus der Rastvertiefung 82 heraus zu gelangen. Zwar stabilisiert das Blockierelement 65 das Einsatzteil 21 somit auch in der Einsetzdrehstellung E, jedoch ist das Einsatzteil 21 in der Einsetzdrehstellung E nicht blockiert, sondern kann durch eine bewusst von einem Nutzer vorgenommene Drehung in die Arretierdrehstellung A überführt werden, ohne dass der Betätigungsabschnitt 69 betätigt werden muss.

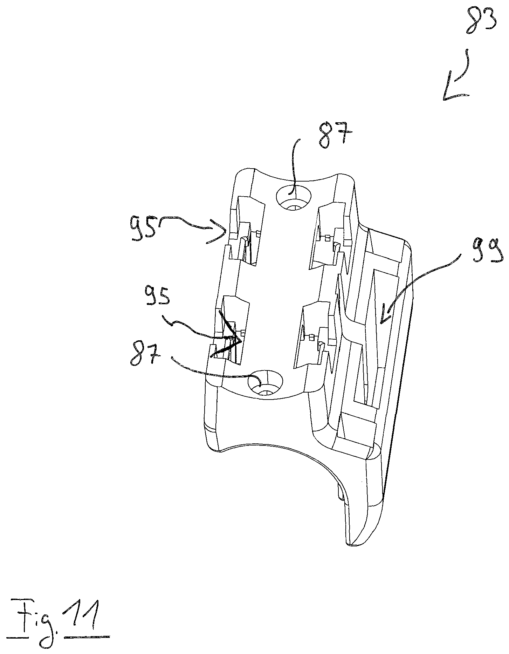

Die Zusammensetzung der Halterung 11 wird insbesondere aus den Explosionsdarstellungen der Fig. 3A bis 3D ersichtlich. Das Gehäuse 19 wird dabei während einer Montage mittels zweier als Schrauben ausgebildeter Befestigungsmittel 91 mit einem Verbindungselement 83 verbunden, über welches die Halterung 11 an dem Rahmen 85 des Zweirads befestigt werden kann (vgl. auch Fig. 10A bis 10C). Dazu umfasst das Verbindungselement 83 zwei Bandaufnahmen 105, welche innerhalb jeweiliger Bandführungskanäle 95 angeordnet sind. Durch die Bandführungskanäle 95 und die Bandaufnahmen 105 können die bereits erwähnten Befestigungsbänder 93 geführt werden, um die Halterung 11 an dem Rahmen 85 befestigen zu können (vgl. Fig. 10A bis 10C). Dazu kann ein erstes Ende 97 des Befestigungsbands 93 um den Rahmen 85 herum und in den Bandführungskanal 95 hineingeführt werden, um in dem Bandführungskanal 95 mittels einer jeweiligen Fixierschraube 101 befestigt zu werden. Ferner weist das Verbindungselement 83 eine taschenartige Aufnahme 99 auf, in welcher das durch den Bandführungskanal 95 geführte erste Ende 97 des Befestigungsbands 93 verstaut werden kann (vgl. Fig. 11).

Das Einsatzteil 21 kann beispielsweise durch den Längsschlitz 53 des Gehäuses 19 in das Gehäuse 19 einsetzbar sein, wozu das Gehäuse 19 insbesondere elastisch verformbar sein kann. Ferner weist das Einsatzteil 21 eine radial bezüglich der Drehachse D wegragende Anschlagserhöhung 37 auf, welche in der Arretierdrehstellung A an einer Anschlagsaussparung 39 des Gehäuses 19 anschlägt (vgl. Fig. 3A bis 3D und 8). Insbesondere kann dieses Anschlagen der Anschlagserhöhung 37 an der Anschlagsaussparung 39 ein Überdrehen des Einsatzteils 21 verhindern, wobei zudem etwaige aufgrund von Fertigungstoleranzen gegebenenfalls mögliche Relativbewegungen zwischen dem Einsatzteil 21 und dem Gehäuse 19 in axialer Richtung bezüglich der Längsachse L der Halterung 11 durch die Anschlagsaussparung 39 und die Anschlagserhöhung 37 begrenzt werden können.

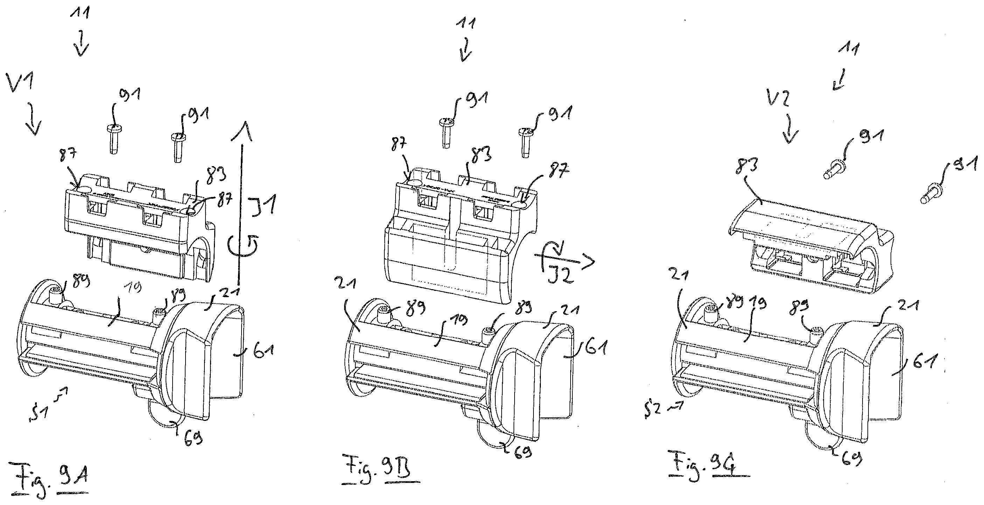

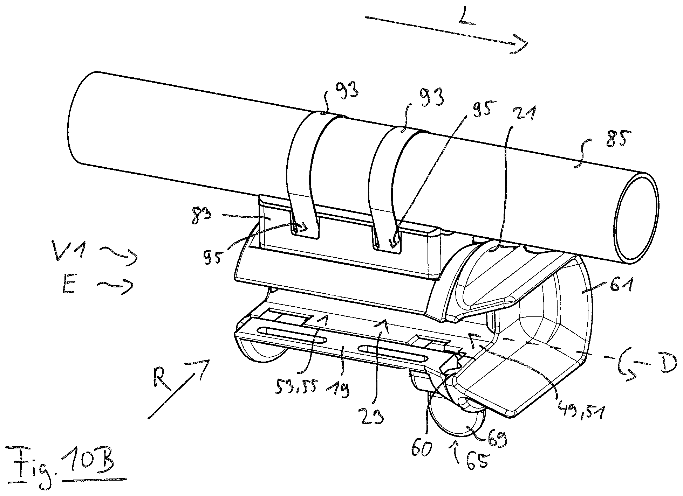

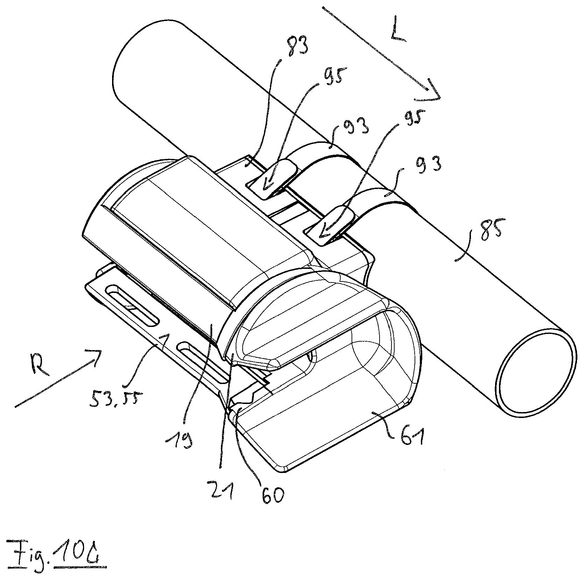

Um das Gehäuse 19 an dem Verbindungselement 83 befestigen zu können, werden die Befestigungsmittel 91 durch an dem Verbindungselement 83 ausgebildete Befestigungsöffnungen 87 und in an dem Gehäuse 19 ausgebildete Befestigungskanäle 89 eingeführt. Wie Fig. 8 zeigt, kann das Gehäuse 19 zwei Paare von Befestigungskanälen 89 aufweisen, wobei die Befestigungskanäle 89 eines jeweiligen Paars um 90° bezüglich der Längsachse L der Halterung 11 zueinander versetzt angeordnet sind. Dies ermöglicht es, das Gehäuse 19 wahlweise in einer ersten Befestigungsstellung S1 oder in einer zweiten Befestigungsstellung S2 mit dem Verbindungselement 83 zu verbinden, um die Halterung 11 wahlweise als Senkrechthalter, so dass die Halterung 11 in der durch den Rahmen 85 definierten Ebene P mit dem Rahmen 85 verbunden ist (vgl. Fig. 10A, 10B und 13), oder als Seitenhalter zu verwenden, wozu die Halterung 11 seitlich versetzt zu der durch den Rahmen 85 definierten Ebene P mit dem Rahmen 85 verbunden werden kann (vgl. Fig. 10C). Dazu kann das Gehäuse 19 in einer ersten Verbindungsstellung V1 des Verbindungselements 83 an dem Verbindungselement 83 in der ersten Befestigungsstellung S1 und in einer zweiten Verbindungsstellung V2 in der zweiten Befestigungsstellung S2 an dem Verbindungselement 83 befestigt werden (vgl. Fig. 9A bis 9C).

Wie Fig. 9A zeigt, kann das Gehäuse 19 in der ersten Befestigungsstellung S1 und der ersten Verbindungsstellung V1 derart mit dem Verbindungselement 83 verbunden werden, dass die Halterung 11 als Senkrechthalter verwendet werden kann, wie die Fig. 10A und 10B veranschaulichen. Um die Halterung 11 hingegen als einen in Fig. 10C veranschaulichten Seitenhalter nutzen zu können, kann das Verbindungselement 83 ausgehend von der ersten Verbindungsstellung V1 um eine erste Einstellachse J1, welche senkrecht zu der Längsachse L der Halterung 11 und der Drehachse D des Einsatzteils 21 ausgerichtet ist, um 180° gedreht werden. Ausgehend von dieser, in Fig. 9B gezeigten Stellung kann das Verbindungselement 83 sodann um eine zweite Einstellachse J2, welche parallel zu der Längsachse L bzw. der Drehachse D ausgerichtet ist, um 90° gedreht werden. Daraus resultiert die zweite Verbindungsstellung V2, in welcher die Befestigungsmittel 91 durch die Befestigungsöffnungen 87 und die der zweiten Befestigungsstellung S2 zugeordneten Befestigungskanäle 89 geführt werden können, um das Gehäuse 19 mit dem Verbindungselement 83 zu verbinden. Die Reihenfolge der Drehungen zum Überführen des Verbindungselements 83 aus der ersten Verbindungsstellung V1 in die zweite Verbindungsstellung V2 ist vertauschbar.

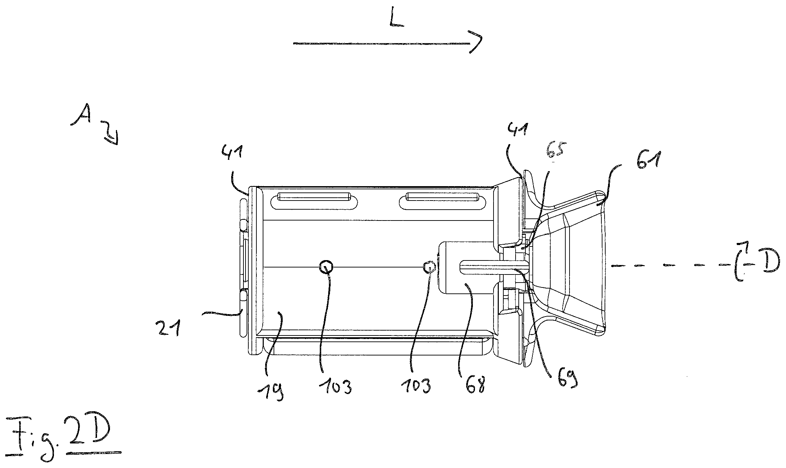

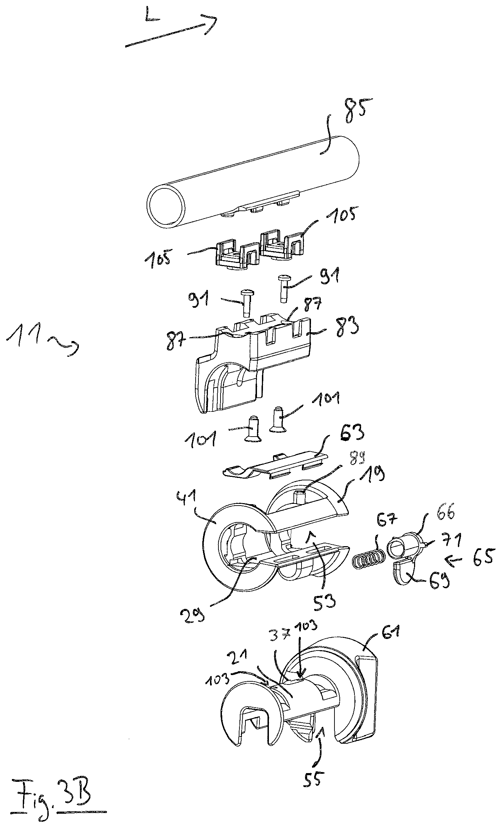

In der zweiten Befestigungsstellung S2 sind die Fixierschrauben 101 in der Einsetzdrehstellung E des Einsatzteils 21 durch die zueinander fluchtenden Längsschlitze 53 und 55 des Gehäuses 19 und des Einsatzteils 21 zugänglich, um die Befestigungsbänder 93 in den Befestigungskanälen 95 fixieren zu können. Um eine solchen Zugang auch in der ersten Befestigungsstellung S1 zu ermöglichen, weisen das Einsatzteil 21 und das Gehäuse 19 ferner in der Arretierdrehstellung A in Flucht zueinander angeordnete Eingriffsöffnungen 103 auf, durch welche ein Werkzeug zum Betätigen der Fixierschrauben 101 geführt werden kann (vgl. Fig. 2D und 3B).

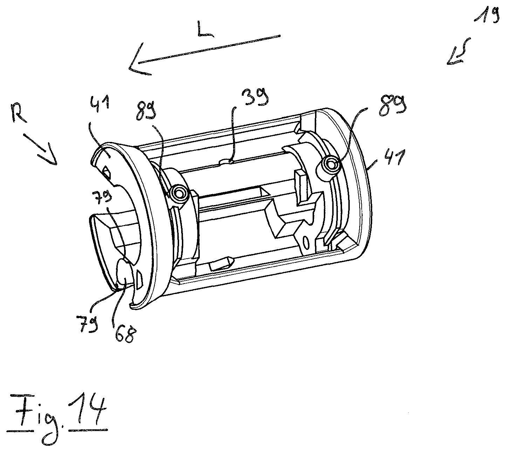

Fig. 14 zeigt ein Gehäuse 19 einer weiteren Ausführungsform der Halterung 11, welches eine weitere Möglichkeit zum Fixieren des Gehäuses 19 an dem Verbindungselement 83 in der ersten Verbindungsstellung V1 und der zweiten Verbindungsstellung V2 des Verbindungselements 83 bietet. Dieses Gehäuse 19 weist lediglich zwei Befestigungskanäle 89 bzw. ein Paar von Befestigungskanälen 89 auf, welche in einer zu der Längsachse L der Halterung 11 senkrechten Ebene um 45° zu der Einsetzrichtung R, entlang welcher der Schenkel 25 in den Aufnahmeraum 23 einsetzbar ist, versetzt ausgerichtet sind. Wie beispielsweise aus Fig. 13 hervorgeht, sind die Befestigungskanäle 89 bei dem in Fig. 14 gezeigten Gehäuse 19 um 45° in Richtung des Rahmens 85 des Zweirads ausgerichtet, an welchem die Halterung 11 zu befestigen ist.

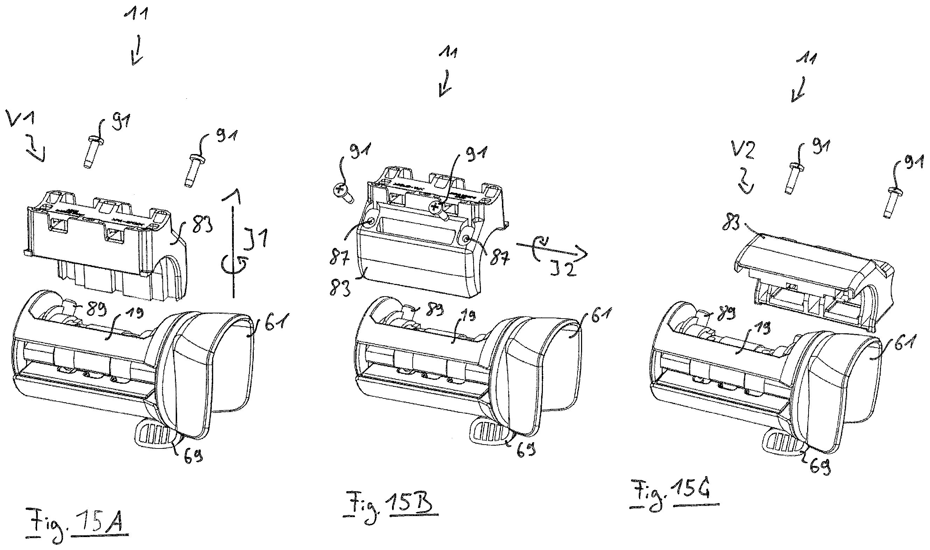

Die Fig. 15A bis 15C veranschaulichen, dass auch eine solche Ausbildung des Gehäuses 19 eine Verwendung der Halterung 11 als Senkrechthalter oder als Seitenhalter ermöglicht, indem das Verbindungselement 83 wahlweise in der ersten Verbindungsstellung V1 oder der zweiten Verbindungsstellung V2 an dem Rahmen 85 befestigt werden kann. Wie Fig. 15B zeigt, weist das Verbindungselement 83 dieser weiteren Ausführungsform zwei zu den Befestigungskanälen 89 korrespondierende, in der ersten Verbindungsstellung V1 und in der zweiten Verbindungsstellung V2 um 45° versetzt zu der Einsetzrichtung R ausgerichtete Befestigungsöffnungen 87 auf, wobei das Gehäuse 19 mittels durch die Befestigungsöffnungen 87 und die Befestigungskanäle 89 geführte Befestigungsmittel 91 an dem Verbindungselement 83 fixiert werden kann. Ausgehend von der ersten Verbindungsstellung V1 bewirkt eine Drehung um 180° um die erste Einstellachse J1, dass die Befestigungsöffnungen 87 um 90° um die zweite Einstellachse J2 versetzt werden (vgl. Fig. 15A und 15B). Wird das Verbindungselement 83 sodann um 90° um die zweite Einstellachse J2 in die zweite Verbindungsstellung V2 gedreht, sind die Befestigungsöffnungen 87 wiederum wie in der ersten Verbindungsstellung V1 um 45° versetzt zu der Einsetzrichtung R angeordnet und das Gehäuse 19 kann sowohl in der ersten Verbindungsstellung V1 als auch in der zweiten Verbindungsstellung V2 in der gleichen Ausrichtung an dem Verbindungselement 83 fixiert werden. Auch der Schenkel 25 kann somit in der ersten Verbindungsstellung V1 und in der zweiten Verbindungsstellung V2 in gleicher Weise und insbesondere entlang der Einsetzrichtung R in den Aufnahmeraum 23 eingesetzt werden.

Die Halterung 11 ermöglicht es somit, bei einer einfachen Betätigung durch eine Drehung von der Einsetzdrehstellung E in die Arretierdrehstellung A das zugeordnete Bügelschloss 17 sicher aufzunehmen, indem der in der Einsetzdrehstellung E einsetzbare Schenkel 25 durch die Drehung in dem Aufnahmeraum 23 verspannt wird. Durch den Adapter 63 kann die Halterung 11 ferner flexibel an verschiedene Bügelschlösser, insbesondere das zugeordnete Bügelschloss 17 und das weitere Bügelschloss 17a, sowie deren Bügel 15 und 15a angepasst werden. Ein Nutzer kann die Halterung 11 somit komfortabel für verschiedene Bügelschlösser 17 und 17a verwenden. Zudem kann ein Nutzer die Halterung 11 wahlweise als Senkrechthalter oder als Seitenhalter verwenden, so dass die Halterung 11 komfortabel in Abhängigkeit von der jeweiligen präferierten Anordnung an dem Rahmen 85 befestigt werden kann.

### Bezugszeichenliste

- 11: Halterung
- 13: Schlosskörper des zugeordneten Bügelschlosses
- 13a: Schlosskörper des weiteren Bügelschlosses
- 15: Bügel des zugeordneten Bügelschlosses
- 15a: Bügel des weiteren Bügelschlosses
- 17: zugeordnetes Bügelschloss
- 17a: weiteres Bügelschloss
- 19: Gehäuse
- 21: Einsatzteil
- 23: Aufnahmeraum
- 25: Schenkel
- 26: Schenkel
- 27: Anlagefläche
- 28: Verbindungsabschnitt
- 29: Innenseite
- 31: Eingriffsabschnitt
- 33: Mantel des Bügels
- 35: Endabschnitt des Aufnahmeraums
- 37: Anschlagserhöhung
- 39: Anschlagsaussparung
- 41: Endabschnitt des Gehäuses
- 43: Mittelpunkt des Aufnahmeraums
- 45: Mittelpunkt einer Querschnittsfläche des Schenkels
- 47: Einführschräge
- 49: Aufnahme für den Schenkel
- 51: Mitnehmer
- 53: Längsschlitz des Gehäuses
- 55: Längsschlitz des Einsatzteils
- 57: Abschnitt des Einsatzteils
- 59: Abschnitt des Einsatzteils
- 60: seitliche Begrenzung
- 61: Schlosskörperaufnahme
- 63: Adapter
- 65: Blockierelement
- 66: Kopfabschnitt
- 67: Feder
- 68: Federaufnahme
- 69: Betätigungsabschnitt
- 71: Verdrängungsabschnitt
- 73: Verdrängungsvertiefung
- 75: Antriebsschräge
- 77: Anschlagabschnitt
- 79: Begrenzung
- 81: Rastvertiefung
- 82: schräge Fläche
- 83: Verbindungselement
- 85: Rahmen
- 87: Befestigungsöffnung
- 89: Befestigungskanal
- 91: Befestigungsmittel
- 93: Befestigungsband
- 95: Bandführungskanal
- 97: erstes Ende des Befestigungsbands
- 99: Aufnahme
- 101: Fixierschraube
- 103: Eingriffsöffnung
- 105: Bandaufnahme
- 107: Schlüssel

- A: Arretierdrehstellung
- B: Blockierstellung
- D: Drehachse des Einsatzteils
- E: Einsetzdrehstellung
- F: Freigabestellung
- H1: erste lichte Höhe
- H2: zweite lichte Höhe
- J1: erste Einstellachse
- J2: zweite Einstellachse
- L: Längsachse
- P: Ebene
- R: Einsetzrichtung
- S1: erste Befestigungsstellung
- S2: zweite Befestigungsstellung
- T: Betätigungsachse
- V1: erste Verbindungsstellung
- V2: zweite Verbindungsstellung

## Patentansprüche

1. Halterung (11) zum Befestigen eines zugeordneten, einen Schlosskörper (13) und einen Bügel (15) aufweisenden Bügelschlosses (17) an einem Zweirad, insbesondere an einem Fahrrad,
wobei die Halterung (11) ein sich entlang einer Längsachse (L) der Halterung (11) erstreckendes Gehäuse (19) und ein Einsatzteil (21) umfasst, welches zumindest teilweise innerhalb des Gehäuses (19) angeordnet und relativ zu dem Gehäuse (19) um eine Drehachse (D) zwischen einer Einsetzdrehstellung (E) und einer Arretierdrehstellung (A) drehbar ist, wobei die Halterung (11) einen Aufnahmeraum (23) für einen Schenkel (25) des Bügels (15) aufweist, in welchen der Schenkel (25) in der Einsetzdrehstellung (E) einsetzbar ist,
**dadurch gekennzeichnet, dass**
der in den Aufnahmeraum (23) eingesetzte Schenkel (25) durch Drehen des Einsatzteils (21) von der Einsetzdrehstellung (E) in die Arretierdrehstellung (A) in dem Aufnahmeraum (23) verspannbar ist.

2. Halterung (11) nach Anspruch 1,
wobei das Einsatzteil (21) eine Anlagefläche (27) für den Schenkel (25) aufweist, welche den Aufnahmeraum (23) einseitig begrenzt, wobei der Schenkel (25) zwischen der Anlagefläche (27) und einer der Anlagefläche (27) in der Arretierdrehstellung (A) entgegengesetzten Innenseite (29) des Gehäuses (19) verspannbar ist,
insbesondere wobei in einer sich senkrecht zu der Längsachse (L) erstreckenden Ebene der Aufnahmeraum (23) in der Einsetzdrehstellung (E) eine erste lichte Höhe (H1) und in der Arretierdrehstellung (A) eine zweite lichte Höhe (H2) aufweist, wobei die zweite lichte Höhe (H2) einem Abstand zwischen der Anlagefläche (27) und der Innenseite (29) entspricht, und wobei die zweite lichte Höhe (H2) geringer ist als die erste lichte Höhe (H1).

3. Halterung (11) nach Anspruch 2,
wobei die Anlagefläche (27) zumindest einen in der Arretierdrehstellung (A) in Richtung der Innenseite (29) des Gehäuses (19) wegragenden Eingriffsabschnitt (31) aufweist, durch welchen der in den Aufnahmeraum (23) eingesetzte Schenkel (25) in der Arretierdrehstellung (A) des Einsatzteils (21) axial bezüglich der Längsachse (L) der Halterung (11) in dem Aufnahmeraum (23) fixiert ist, insbesondere wobei die Anlagefläche (27) an einander axial bezüglich der Längsachse (L) entgegensetzten Endabschnitten (35) des Aufnahmeraums (23) einen jeweiligen Eingriffsabschnitt (31) aufweist.

4. Halterung (11) nach einem der vorhergehenden Ansprüche,
wobei das Einsatzteil (21) eine radial bezüglich der Drehachse (D) nach außen wegragende Anschlagserhöhung (37) aufweist, welche in der Arretierdrehstellung (A) an einer von dem Gehäuse (19) gebildeten Anschlagsaussparung (39) anschlägt; und/oder
wobei das Einsatzteil (21) sich axial bezüglich der Längsachse (L) beidseitig über das Gehäuse (19) hinaus erstreckt und wobei das Einsatzteil (21) das Gehäuse (19) an einander axial entgegengesetzten Endabschnitten (41) des Gehäuses (19) übergreift, insbesondere wobei das Einsatzteil (21) an den Endabschnitten (41) anliegt.

5. Halterung (11) nach einem der vorhergehenden Ansprüche,
wobei der Aufnahmeraum (23) in einer Projektion auf eine zu der Längsachse (L) senkrechte Ebene durch das Drehen des Einsatzteils (21) bewegbar ist; und/oder
wobei der in der Einsetzdrehstellung (E) in den Aufnahmeraum (23) eingesetzte und in der Arretierdrehstellung (A) in dem Aufnahmeraum (23) verspannte Schenkel (25) exzentrisch zu der Drehachse (D) positioniert ist; und/oder
wobei der in den Aufnahmeraum (23) eingesetzte Schenkel (25) bei einer Drehung des Einsatzteils (21) mitführbar ist, insbesondere wobei ein Mittelpunkt (45) einer Querschnittsfläche des Schenkels (25) entlang eines Kreisbogens um die Drehachse (D) mitführbar ist.

6. Halterung (11) nach einem der vorhergehenden Ansprüche,
wobei das Gehäuse (19) eine Einführschräge (47) aufweist, über welche der Schenkel (25) während der Drehung des Einsatzteils (21) in die Arretierdrehstellung (A) führbar ist und an welcher der Schenkel (25) in der Arretierdrehstellung (A) anliegt.

7. Halterung (11) nach einem der vorhergehenden Ansprüche,
wobei das Gehäuse (19) und das Einsatzteil (21) einen jeweiligen sich entlang der Längsachse (L) der Halterung (11) erstreckenden Längsschlitz (53, 55) aufweisen, wobei die Längsschlitze (53, 55) in der Einsetzdrehstellung (E) zueinander fluchtend angeordnet sind, und wobei der Schenkel (25) durch die Längsschlitze (53, 55) in den Aufnahmeraum (23) einsetzbar ist, insbesondere wobei das Einsatzteil (21) den Längsschlitz (53) des Gehäuses (19) in der Arretierdrehstellung (A) zumindest teilweise, insbesondere vollständig, versperrt.

8. Halterung (11) nach einem der vorhergehenden Ansprüche,
wobei das Einsatzteil (21) eine Schlosskörperaufnahme (61) umfasst, in welche der Schlosskörper (13) einsetzbar ist,
insbesondere wobei in einem Geschlossenzustand des Bügelschlosses (17), in welchem der Schenkel (25) mit dem Schlosskörper (13) verbunden ist, der Schenkel (25) in den Aufnahmeraum (23) und der Schlosskörper (13) in die Schlosskörperaufnahme (61) einsetzbar ist; und/oder
insbesondere wobei die Schlosskörperaufnahme (61) in Richtung der Längsachse (L) zulaufend, insbesondere konisch zulaufend, ausgebildet ist; und/oder
insbesondere wobei das Einsatzteil (21) durch Drehen des in die Schlosskörperaufnahme (61) eingesetzten Schlosskörpers (13) von der Einsetzdrehstellung (E) in die Arretierdrehstellung (A) drehbar ist.

9. Halterung (11) nach einem der vorhergehenden Ansprüche,
wobei ein Adapter (63) zur Verwendung der Halterung (11) mit einem weiteren Bügelschloss (17a), dessen Bügel (15a) sich von dem Bügel (15) des zugeordneten Bügelschlosses (17) unterscheidet, vorgesehen ist, welcher wahlweise an dem Gehäuse (19) anbringbar ist, wobei ein Schenkel (25) des weiteren Bügelschlosses (17a) bei angebrachtem Adapter (63) in der Arretierdrehstellung (A) zwischen dem Adapter (63) und dem Einsatzteil (21) verspannbar ist, insbesondere wobei der Adapter (63) an dem Gehäuse (19) einclipsbar ist.

10. Halterung (11) nach einem der vorhergehenden Ansprüche,
wobei die Halterung (11) ein Blockierelement (65) aufweist, durch welches das Einsatzteil (21) in der Arretierdrehstellung (A) blockierbar ist, insbesondere wobei das Blockierelement (65) axial bezüglich der Längsachse (L) in Richtung einer Blockierstellung (B) vorgespannt ist; und/oder insbesondere wobei das Einsatzteil (21) in Drehstellungen zwischen der Arretierdrehstellung (A) und der Einsetzdrehstellung (E) eine Bewegung des Blockierelements (65) in die Blockierstellung (B) verhindert.

11. Halterung (11) nach Anspruch 10,
wobei das Blockierelement (65) einen Betätigungsabschnitt (69) aufweist, wobei das Blockierelement (65) durch Betätigen des Betätigungsabschnitts (69) von der Blockierstellung (B) in eine axial gegenüber der Blockierstellung (B) versetzte Freigabestellung (F) überführbar ist, in welcher das Einsatzteil (21) für eine Drehung in Richtung der Einsetzdrehstellung (E) freigegeben ist,
insbesondere wobei das Blockierelement (65) einen Anschlagabschnitt (77) aufweist, welcher bei einer Bewegung des Blockierelements (65) aus der Blockierstellung (B) in die Freigabestellung (F) bei Erreichen der Freigabestellung (F) an einer Begrenzung (79) des Gehäuses (19) anschlägt.

12. Halterung (11) nach Anspruch 11,
wobei das Blockierelement (65) durch eine Drehbewegung um eine parallel zu der Drehachse (D) ausgerichtete oder der Drehachse (D) entsprechende Betätigungsachse (T) aus der Blockierstellung (B) in die Freigabestellung (F) überführbar ist,
insbesondere wobei das Blockierelement (65) einen Verdrängungsabschnitt (71) aufweist, mit welchem das Blockierelement (65) in der Arretierdrehstellung (A) des Einsatzteils (21) in eine in dem Einsatzteil (21) ausgebildete Verdrängungsvertiefung (73) eingreift, wobei die Verdrängungsvertiefung (73) und der Verdrängungsabschnitt (71) eine jeweilige Antriebsschräge (75) aufweisen, welche derart zusammenwirken, dass das Blockierelement (65) durch die Drehbewegung axial aus der Verdrängungsvertiefung (73) herausdrängbar ist,
wobei die Verdrängungsvertiefung (73) und der Verdrängungsabschnitt (71) ferner insbesondere zwei jeweilige Antriebsschrägen (75) aufweisen, welche derart zusammenwirken, dass das Blockierelement (65) in der Arretierdrehstellung (A) unabhängig von einer Richtung, entlang welcher die Drehbewegung um die Betätigungsachse (T) erfolgt, axial aus der Verdrängungsvertiefung (73) herausdrängbar ist.

13. Halterung (11) nach einem der vorhergehenden Ansprüche,
wobei die Halterung (11) ein Verbindungselement (83) aufweist, welches an einem Rahmen (85) des Zweirads befestigbar ist, wobei das Gehäuse (19) an dem Verbindungselement (83) fixierbar, insbesondere verschraubbar, ist.

14. Halterung (11) nach Anspruch 13,
wobei das Verbindungselement (83) in einer ersten Verbindungsstellung (V1) und in einer zweiten Verbindungstellung (V2) an dem Rahmen (85) des Zweirads befestigbar ist, wobei das Gehäuse (19) in der ersten Verbindungsstellung (V1) und in der zweiten Verbindungsstellung (V2) des Verbindungselements (83) an dem Verbindungselement (83) fixierbar ist, wobei das Verbindungselement (83) durch eine Drehung um 180° um eine senkrecht zu der Längsachse (L) der Halterung (11) orientierte erste Einstellachse (J1) und durch eine Drehung um 90° um eine zu der Längsachse (L) der Halterung (11) parallele oder der Längsachse (L) entsprechende zweite Einstellachse (J2) von der ersten Verbindungstellung (V1) in die zweite Verbindungsstellung (V2) überführbar ist,
insbesondere wobei der Schenkel (25) in der ersten Verbindungsstellung (V1) des Verbindungselements (83) und in der zweiten Verbindungsstellung (V2) des Verbindungselements (19) bei an dem Verbindungselement (83) fixiertem Gehäuse (19) in gleicher Weise, insbesondere entlang einander entsprechenden oder zueinander parallelen Richtungen, in den Aufnahmeraum (23) einsetzbar ist.

15. Halterung (11) nach Anspruch 14,
wobei das Verbindungselement (83) zumindest eine Befestigungsöffnung (87) und das Gehäuse (19) zumindest einen Befestigungskanal (89) aufweist, wobei das Gehäuse (19) mittels eines durch die Befestigungsöffnung (87) und den Befestigungskanal (89) eingeführten Befestigungsmittels (91) an dem Verbindungselement (83) fixierbar ist, wobei die Befestigungsöffnung (87) und der Befestigungskanal (89) in der ersten Verbindungsstellung (V1) und in der zweiten Verbindungsstellung (V2) des Verbindungselements (83) in einer zu der Längsachse (L) der Halterung (11) senkrechten Ebene um 45° versetzt zu einer Einsetzrichtung (R), entlang welcher der Schenkel (25) in den Aufnahmeraum (23) einsetzbar ist, ausgerichtet sind, insbesondere wobei die Befestigungsöffnung (87) und der Befestigungskanal (89) um 45° in Richtung des Rahmens (85) des Zweirads zu der Einsetzrichtung (R) versetzt ausgerichtet sind.

## Claims

1. A holder (11) for fastening an associated hoop lock (17), which has a lock body (13) and a hoop (15), to a two-wheeler, in particular to a bicycle, wherein the holder (11) comprises a housing (19), which extends along a longitudinal axis (L) of the holder (11), and an insertion part (21) which is at least partly arranged within the housing (19) and which is rotatable relative to the housing (19) about an axis of rotation (D) between an insertion rotational position (E) and a locking rotational position (A),
wherein the holder (11) has a reception space (23) for a limb (25) of the hoop (15) into which the limb (25) can be inserted in the insertion rotational position (E),
**characterized in that**
the limb (25) inserted into the reception space (23) can be braced in the reception space (23) by rotating the insertion part (21) from the insertion rotational position (E) into the locking rotational position (A).

2. A holder (11) in accordance with claim 1,
wherein the insertion part (21) has a contact surface (27) for the limb (25), said contact surface (27) bounding the reception space (23) at one side, wherein the limb (25) can be braced between the contact surface (27) and an inner side (29) of the housing (19) that is opposite the contact surface (27) in the locking rotational position (A),
in particular wherein, in a plane extending perpendicular to the longitudinal axis (L), the reception space (23) has a first clearance (H1) in the insertion rotational position (E) and a second clearance (H2) in the locking rotational position (A), wherein the second clearance (H2) corresponds to a spacing between the contact surface (27) and the inner side (29), and wherein the second clearance (H2) is smaller than the first clearance (H1).

3. A holder (11) in accordance with claim 2,
wherein the contact surface (27) has at least one engagement section (31) which projects away in the direction of the inner side (29) of the housing (19) in the locking rotational position (A) and by which the limb (25) inserted into the reception space (23) is axially fixed in the reception space (23) with respect to the longitudinal axis (L) of the holder (11) in the locking rotational position (A) of the insertion part (21), in particular wherein the contact surface (27) has a respective engagement section (31) at end sections (35) of the reception space (23) that are axially opposite one another with respect to the longitudinal axis (L).

4. A holder (11) in accordance with any one of the preceding claims,
wherein the insertion part (21) has an elevated abutment portion (37) which projects away radially outwardly with respect to the axis of rotation (D) and which abuts an abutment cut-out (39) formed by the housing (19) in the locking rotational position (A); and/or
wherein the insertion part (21) extends axially with respect to the longitudinal axis (L) beyond the housing (19) at both sides, and wherein the insertion part (21) engages over the housing (19) at mutually axially opposite end sections (41) of the housing (19), in particular wherein the insertion part (21) contacts the end sections (41).

5. A holder (11) in accordance with any one of the preceding claims,
wherein the reception space (23) is movable in a projection onto a plane perpendicular to the longitudinal axis (L) by the rotation of the insertion part (21); and/or
wherein the limb (25) inserted into the reception space (23) in the insertion rotational position (E) and braced in the reception space (23) in the locking rotational position (A) is positioned eccentrically with respect to the axis of rotation (D); and/or
wherein the limb (25) inserted into the reception space (23) can be taken along on a rotation of the insertion part (21), in particular wherein a center (45) of a cross-sectional surface of the limb (25) can be taken along along an arc of a circle about the axis of rotation (D).

6. A holder (11) in accordance with any one of the preceding claims,
wherein the housing (19) has an introduction slope (47) via which the limb (25) can be guided during the rotation of the insertion part (21) into the locking rotational position (A) and which the limb (25) contacts in the locking rotational position (A).

7. A holder (11) in accordance with any one of the preceding claims,
wherein the housing (19) and the insertion part (21) have a respective longitudinal slot (53, 55) extending along the longitudinal axis (L) of the holder (11), wherein the longitudinal slots (53, 55) are arranged in alignment with one another in the insertion rotational position (E), and wherein the limb (25) can be inserted through the longitudinal slots (53, 55) into the reception space (23),
in particular wherein the insertion part (21) at least partly blocks, in particular completely blocks, the longitudinal slot (53) of the housing (19) in the locking rotational position (A).

8. A holder (11) in accordance with any one of the preceding claims,
wherein the insertion part (21) comprises a lock body receiver (61) into which the lock body (13) can be inserted,
in particular wherein the limb (25) can be inserted into the reception space (23) and the lock body (13) can be inserted into the lock body receiver (61) in a closed state of the hoop lock (17) in which the limb (25) is connected to the lock body (13); and/or
in particular wherein the lock body receiver (61) is formed as converging, in particular conically converging, in the direction of the longitudinal axis (L); and/or
in particular wherein the insertion part (21) is rotatable from the insertion rotational position (E) into the locking rotational position (A) by rotating the lock body (13) inserted into the lock body receiver (61).

9. A holder (11) in accordance with any one of the preceding claims,
wherein an adapter (63) is provided for the use of the holder (11) with a further hoop lock (17a) whose hoop (15a) differs from the hoop (15) of the associated hoop lock (17), said adapter (63) being selectively attachable to the housing (19), wherein, when the adapter (63) is attached, a limb (25) of the further hoop lock (17a) can be braced between the adapter (63) and the insertion part (21) in the locking rotational position (A), in particular wherein the adapter (63) can be clipped in at the housing (19).

10. A holder (11) in accordance with any one of the preceding claims,
wherein the holder (11) has a blocking element (65) by which the insertion part (21) can be blocked in the locking rotational position (A),
in particular wherein the blocking element (65) is axially preloaded with respect to the longitudinal axis (L) in the direction of a blocking position (B); and/or
in particular wherein the insertion part (21) prevents a movement of the blocking element (65) into the blocking position (B) in rotational positions between the locking rotational position (A) and the insertion rotational position (E).

11. A holder (11) in accordance with claim 10,
wherein the blocking element (65) has an actuation section (69), wherein the blocking element (65) can be transferred by an actuation of the actuation section (69) from the blocking position (B) into a release position (F) which is axially offset with respect to the blocking position (B) and in which the insertion part (21) is released for a rotation in the direction of the insertion rotational position (E),
in particular wherein the blocking element (65) has an abutment section (77) which, on a movement of the blocking element (65) from the blocking position (B) into the release position (F), abuts a boundary (79) of the housing (19) on the reaching of the release position (F).

12. A holder (11) in accordance with claim 11,
wherein the blocking element (65) can be transferred from the blocking position (B) into the release position (F) by a rotational movement about an actuation axis (T) aligned in parallel with the axis of rotation (D) or corresponding to the axis of rotation (D),
in particular wherein the blocking element (65) has a displacement section (71) with which the blocking element (65) engages into a displacement recess (73), which is formed in the insertion part (21), in the locking rotational position (A) of the insertion part (21), wherein the displacement recess (73) and the displacement section (71) have a respective drive slope (75), said respective drive slopes (75) cooperating such that the blocking element (65) can be axially urged out of the displacement recess (73) by the rotational movement,
wherein the displacement recess (73) and the displacement section (71) further in particular have two respective drive slopes (75) which cooperate such that, in the locking rotational position (A), the blocking element (65) can be axially urged out of the displacement recess (73) irrespectively of a direction along which the rotational movement about the actuation axis (T) takes place.

13. A holder (11) in accordance with any one of the preceding claims,
wherein the holder (11) has a connection element (83) which can be fastened to a frame (85) of the two-wheeler, wherein the housing (19) can be fixed, in particular can be screwed, to the connection element (83).

14. A holder (11) in accordance with claim 13,
wherein the connection element (83) can be fastened to the frame (85) of the two-wheeler in a first connection position (V1) and in a second connection position (V2), wherein the housing (19) can be fixed to the connection element (83) in the first connection position (V1) and in the second connection position (V2) of the connection element (83), wherein the connection element (83) can be transferred from the first connection position (V1) into the second connection position (V2) through a rotation by 180° about a first adjustment axis (J1) oriented perpendicular to the longitudinal axis (L) of the holder (11) and through a rotation by 90° about a second adjustment axis (J2) in parallel with the longitudinal axis (L) of the holder (11) or corresponding to the longitudinal axis (L),
in particular wherein, when the housing (19) is fixed to the connection element (83), the limb (25) can be inserted into the reception space (23) in the same manner, in particular along mutually corresponding or mutually parallel directions, in the first connection position (V1) of the connection element (83) and in the second connection position (V2) of the connection element (19).

15. A holder (11) in accordance with claim 14,
wherein the connection element (83) has at least one fastening opening (87) and the housing (19) has at least one fastening passage (89), wherein the housing (19) can be fixed to the connection element (83) by means of a fastening means (91) introduced through the fastening opening (87) and the fastening passage (89), wherein the fastening opening (87) and the fastening passage (89) are aligned offset by 45° from an insertion direction (R), along which the limb (25) can be inserted into the reception space (23), in a plane perpendicular to the longitudinal axis (L) of the holder (11) in the first connection position (V1) and in the second connection position (V2) of the connection element (83), in particular wherein the fastening opening (87) and the fastening passage (89) are aligned offset by 45° from the insertion direction (R) in the direction of the frame (85) of the two-wheeler.

## Revendications

1. Elément de retenue (11) pour fixer un antivol à étrier (17) associé muni d'un corps d'antivol (13) et d'un étrier (15) sur un deux-roues, en particulier sur un vélo,
dans lequel
l'élément de retenue (11) comprend un boîtier (19) qui s'étend le long d'un axe longitudinal (L) de l'élément de retenue (11) et une pièce d'insertion (21) qui est disposée au moins en partie à l'intérieur du boîtier (19) et qui peut tourner par rapport au boîtier (19) autour d'un axe de rotation (D) entre une position de rotation d'insertion (E) et une position de rotation d'arrêt (A), l'élément de retenue (11) présente un espace de réception (23) pour une branche (25) de l'étrier (15), dans lequel la branche (25) peut être insérée dans la position de rotation d'insertion (E),
**caractérisé en ce que**
la branche (25) insérée dans l'espace de réception (23) peut être serrée dans l'espace de réception (23) par rotation de la pièce d'insertion (21) de la position de rotation d'insertion (E) à la position de rotation d'arrêt (A).

2. Elément de retenue (11) selon la revendication 1,
dans lequel la pièce d'insertion (21) présente une surface d'appui (27) pour la branche (25), qui délimite l'espace de réception (23) d'un côté, la branche (25) pouvant être serrée entre la surface d'appui (27) et une face intérieure (29) du boîtier (19) qui, dans la position de rotation d'arrêt (A), est opposée à la surface d'appui (27),
en particulier, dans un plan s'étendant perpendiculairement à l'axe longitudinal (L), l'espace de réception (23) présente, dans la position de rotation d'insertion (E), une première hauteur libre (H1) et, dans la position de rotation d'arrêt (A), une deuxième hauteur libre (H2), la deuxième hauteur libre (H2) correspondant à une distance entre la surface d'appui (27) et la face intérieure (29), et la deuxième hauteur libre (H2) étant inférieure à la première hauteur libre (H1).

3. Elément de retenue (11) selon la revendication 2,
dans lequel la surface d'appui (27) présente au moins une portion d'engagement (31) qui, dans la position de rotation d'arrêt (A), fait saillie en direction de la face intérieure (29) du boîtier (19) et par laquelle la branche (25) insérée dans l'espace de réception (23) est fixée dans l'espace de réception (23) axialement par rapport à l'axe longitudinal (L) de l'élément de retenue (11), dans la position de rotation d'arrêt (A) de la pièce d'insertion (21), en particulier, la surface d'appui (27) présente une portion d'engagement (31) respective sur des portions d'extrémité (35) de l'espace de réception (23) opposées l'une à l'autre axialement par rapport à l'axe longitudinal (L).

4. Elément de retenue (11) selon l'une des revendications précédentes,
dans lequel la pièce d'insertion (21) présente une surélévation de butée (37) qui fait saillie vers l'extérieur radialement par rapport à l'axe de rotation (D) et qui, dans la position de rotation d'arrêt (A), vient en butée contre un évidement de butée (39) formé par le boîtier (19) ; et/ou
la pièce d'insertion (21) s'étend au-delà du boîtier (19) des deux côtés axialement par rapport à l'axe longitudinal (L), et la pièce d'insertion (21) chevauche le boîtier (19) au niveau des portions d'extrémité axialement opposées (41) du boîtier (19),
en particulier, la pièce d'insertion (21) est en appui contre les portions d'extrémité (41).

5. Elément de retenue (11) selon l'une des revendications précédentes, dans lequel l'espace de réception (23), vu dans une projection sur un plan perpendiculaire à l'axe longitudinal (L), est mobile par rotation de la pièce d'insertion (21) ; et/ou
la branche (25), insérée dans l'espace de réception (23) en position de rotation d'insertion (E) et serrée dans l'espace de réception (23) en position de rotation d'arrêt (A), est excentrée par rapport à l'axe de rotation (D) ; et/ou la branche (25), insérée dans l'espace de réception (23), peut être entraînée lors d'une rotation de la pièce d'insertion (21),
en particulier, le centre (45) d'une surface en section transversale de la branche (25) peut être entraîné le long d'un arc de cercle autour de l'axe de rotation (D).

6. Elément de retenue (11) selon l'une des revendications précédentes, dans lequel le boîtier (19) comporte une rampe d'insertion (47) qui permet de guider la branche (25) pendant la rotation de la pièce d'insertion (21) vers la position de rotation d'arrêt (A) et contre laquelle la branche (25) est en appui dans la position de rotation d'arrêt (A).

7. Elément de retenue (11) selon l'une des revendications précédentes,
dans lequel le boîtier (19) et la pièce d'insertion (21) comportent chacun une fente longitudinale (53, 55) s'étendant le long de l'axe longitudinal (L) de l'élément de retenue (11), les fentes longitudinales (53, 55) étant disposées en alignement l'une de l'autre dans la position de rotation d'insertion (E), et la branche (25) pouvant être insérée dans l'espace de réception (23) à travers les fentes longitudinales (53, 55),
en particulier, dans la position de rotation d'arrêt (A), la pièce d'insertion (21) vient obturer au moins en partie, en particulier en totalité, la fente longitudinale (53) du boîtier (19).

8. Elément de retenue (11) selon l'une des revendications précédentes,
dans lequel la pièce d'insertion (21) comprend un logement (61) pour le corps d'antivol, dans lequel le corps d'antivol (13) peut être inséré, en particulier, à l'état fermé de l'antivol à étrier (17) dans lequel la branche (25) est reliée au corps d'antivol (13), la branche (25) peut être insérée dans l'espace de réception (23) et le corps d'antivol (13) peut être inséré dans le logement (61) pour le corps d'antivol ; et/ou
en particulier, le logement (61) pour le corps d'antivol est conçu de manière à se rétrécir, notamment en forme conique, en direction de l'axe longitudinal (L) ; et/ou
en particulier, la pièce d'insertion (21) peut être tournée de la position de rotation d'insertion (E) vers la position de rotation d'arrêt (A) par rotation du corps d'antivol (13) inséré dans le logement (61) pour le corps d'antivol.

9. Elément de retenue (11) selon l'une des revendications précédentes,
dans lequel un adaptateur (63) est prévu pour utiliser l'élément de retenue (11) avec un autre antivol à étrier (17a), dont l'étrier (15a) diffère de l'étrier (15) de l'antivol à étrier associé (17), lequel peut être fixé optionnellement au boîtier (19),
lorsque l'adaptateur (63) est fixé, une branche (25) de l'autre antivol à étrier (17a) peut être serrée entre l'adaptateur (63) et la pièce d'insertion (21), dans la position de rotation d'arrêt (A),
en particulier, l'adaptateur (63) peut être clipsé sur le boîtier (19).

10. Elément de retenue (11) selon l'une des revendications précédentes,
dans lequel l'élément de retenue (11) comporte un élément de blocage (65) permettant de bloquer la pièce d'insertion (21) dans la position de rotation d'arrêt (A),
en particulier, l'élément de blocage (65) est précontraint en direction d'une position de blocage (B) axialement par rapport à l'axe longitudinal (L) ; et/ou
en particulier, dans les positions de rotation situées entre la position de rotation d'arrêt (A) et la position de rotation d'insertion (E), la pièce d'insertion (21) empêche un mouvement de l'élément de blocage (65) vers la position de blocage (B).

11. Elément de retenue (11) selon la revendication 10,
dans lequel l'élément de blocage (65) comporte une portion d'actionnement (69),
par actionnement de la portion d'actionnement (69), l'élément de blocage (65) peut être transféré de la position de blocage (B) vers une position de libération (F) qui est décalée axialement par rapport à la position de blocage (B) et dans laquelle la pièce d'insertion (21) est alors libérée pour une rotation en direction de la position de rotation d'insertion (E),
en particulier, l'élément de blocage (65) comporte une portion de butée (77) qui, lors d'un mouvement de l'élément de blocage (65) de la position de blocage (B) vers la position de libération (F), vient buter contre une délimitation (79) du boîtier (19) lorsqu'il atteint la position de libération (F).

12. Elément de retenue (11) selon la revendication 11,
dans lequel l'élément de blocage (65) peut être transféré de la position de blocage (B) vers la position de libération (F) par un mouvement de rotation autour d'un axe d'actionnement (T) qui est orienté parallèlement à l'axe de rotation (D) ou qui correspond à l'axe de rotation (D),
en particulier, l'élément de blocage (65) comporte une portion de refoulement (71) par laquelle l'élément de blocage (65) s'engage dans un évidement de refoulement (73), formé dans la pièce d'insertion (21), dans la position de rotation d'arrêt (A) de la pièce d'insertion (21), l'évidement de refoulement (73) et la portion de refoulement (71) comprenant chacun une rampe d'entraînement (75) qui interagissent de telle sorte que l'élément de blocage (65) puisse être refoulé axialement hors d'évidement de refoulement (73) par le mouvement de rotation,
en particulier, l'évidement de refoulement (73) et la portion de refoulement (71) comprennent chacun deux rampes d'entraînement (75) qui interagissent de telle sorte que dans la position de rotation d'arrêt (A), l'élément de blocage (65) puisse être refoulé axialement hors de l'évidement de refoulement (73), indépendamment d'une direction selon laquelle s'effectue le mouvement de rotation autour de l'axe d'actionnement (T).

13. Elément de retenue (11) selon l'une des revendications précédentes, dans lequel l'élément de retenue (11) comprend un élément de liaison (83) pouvant être fixé au cadre (85) d'un deux-roues, le boîtier (19) pouvant être fixé à l'élément de liaison (83), notamment par vissage.

14. Elément de retenue (11) selon la revendication 13,
dans lequel l'élément de liaison (83) peut être fixé au cadre (85) du deux-roues dans une première position de liaison (V1) et dans une deuxième position de liaison (V2), le boîtier (19) pouvant être fixé à l'élément de liaison (83) dans la première position de liaison (V1) et dans la deuxième position de liaison (V2) de l'élément de liaison (83), l'élément de liaison (83) pouvant être transféré de la première position de liaison (V1) vers la deuxième position de liaison (V2) par une rotation de 180° autour d'un premier axe de réglage (J1) orienté perpendiculairement à l'axe longitudinal (L) de l'élément de retenue (11) et par une rotation de 90° autour d'un deuxième axe de réglage (J2) parallèle à l'axe longitudinal (L) de l'élément de retenue (11) ou correspondant à l'axe longitudinal (L),
en particulier, lorsque le boîtier (19) est fixé à l'élément de liaison (83), dans la première position de liaison (V1) de l'élément de liaison (83) et dans la deuxième position de liaison (V2) de l'élément de liaison (83), la branche (25) peut être insérée dans l'espace de réception (23) de la même manière, notamment selon des directions qui se correspondent ou sont parallèles l'une à l'autre.

15. Elément de retenue (11) selon la revendication 14,
dans lequel l'élément de liaison (83) comporte au moins une ouverture de fixation (87) et le boîtier (19) comporte au moins un canal de fixation (89), le boîtier (19) peut être fixé à l'élément de liaison (83) à l'aide d'un moyen de fixation (91) introduit à travers l'ouverture de fixation (87) et le canal de fixation (89),
dans la première position de liaison (V1) et dans la deuxième position de liaison (V2) de l'élément de liaison (83), dans un plan perpendiculaire à l'axe longitudinal (L) de l'élément de retenue (11), l'ouverture de fixation (87) et le canal de fixation (89) sont orientés avec un décalage de 45° par rapport à une direction d'insertion (R) selon laquelle la branche (25) peut être insérée dans l'espace de réception (23),
en particulier, l'ouverture de fixation (87) et le canal de fixation (89) sont orientés avec un décalage de 45° par rapport à la direction d'insertion (R) en direction du cadre (85) du deux-roues.
